# EUROPÄISCHE PATENTANMELDUNG

(11) **EP 1 926 284 A1**
(43) Veröffentlichungstag der Anmeldung: **28.05.2008**
(21) Anmeldenummer: 06023833.4
(22) Anmeldetag: 16.11.2006
(51) Int. Cl.: H04L 29/08

(54) **Verfahren zum Bereitstellen eines Zusatzdienstes zu einem Basisdienst in einem Peer-to-Peer-Netzwerk**

(30) Priorität: 25.07.2006 EP 06015487; 06.09.2006 DE 102006041868
(71) Anmelder: SIEMENS AKTIENGESELLSCHAFT, 80333 München (DE)
(72) Erfinder: Gerdes, Christoph, 81667 München (DE); Prinz, Vivian, 80798 München (DE); Southall, Alan, 81247 München (DE)

(57) **Zusammenfassung**

Verfahren zum Bereitstellen eines Zusatzdienstes zu einem Basisdienst in einem Peer-Einrichtungen aufweisenden Peerto-Peer-Netzwerk, wobei der Zusatzdienst in Abhängigkeit von Profilparametern eines Nutzers einer den Basisdienst anfragenden Peer-Einrichtung ausgewählt wird und wobei der Zusatzdienst ein Basisdienstergebnis des Basisdienstes verarbeitet, das Basisdienstergebnis mit zusätzlichen Daten ergänzt und der anfragenden Peer-Einrichtung als Gesamtdienstergebnis übermittelt.

## Beschreibung

Mit Peer-to-Peer-Systemen ist es möglich, eine Vielzahl von Geräten, die im Folgenden als Peer-Einrichtungen bezeichnet werden, miteinander zu vernetzen. Die Kommunikation zwischen den Peer-Einrichtungen erfolgt dabei über das Protokoll eines Kommunikationsnetzwerkes, beispielsweise dem Internet. Die an dem Peer-to-Peer-Netzwerk teilnehmenden Peer-Einrichtungen können dabei bestimmte Dienste anbieten, wie z. B. die automatische Übersetzung eines Textes oder einen Audio- oder Video-Stream auf Anfrage senden. Durch Peer-to-Peer-Netzwerke ist es möglich, ein netzweites Ressourcen- oder Dienst-Sharing zu ermöglichen, ohne zentrale Infrastrukturen wie zentrale Servereinrichtungen, einsetzen zu müssen.

Die immer stärkere Verbreitung von Peer-to-Peer-Netzwerken und deren kommerzielle Nutzung, beispielsweise in Form von File-Sharing-Netzwerken oder dem Anbieten von Audio- oder Video-Streaming, Voice-over-IP-Diensten (VOIP) oder Chat-Anwendungen, bietet insbesondere Möglichkeiten, bei über Peer-to-Peer-Netzwerken verbreiteten Diensten Werbung zu positionieren. Ein Nutzer, der dazu bereit ist, bestimmte Werbeinhalte zu akzeptieren, die beispielsweise als ein Zusatzdienst in Form von Werbeeinblendungen zu einem Basisdienst, wie beispielsweise einem Video-Stream, auftreten, könnte als Gegenleistung für die jeweiligen Video-Stream-Inhalte weniger zahlen.

Im Internet ist es mittlerweile üblich, variable Werbeelemente in die eigentlichen Inhalte von Internetseiten, wie bei Zeitungsanzeigen, einzubetten. Dabei ist wünschenswert, dass der Werbedienst insbesondere an bestimmte Zielgruppen, also eine Auswahl aus an einem jeweiligen Peer-to-Peer-Netzwerk teilnehmenden Peer-Einrichtungen, angepasst zugespielt werden kann. Um eine entsprechende personalisierte Werbung in Peer-to-Peer-Netzwerken zu realisieren, ist eine dynamische Zusammensetzung und Auswahl der Basisdienste (Inhalte) und Zusatzdienste (Werbedienste) notwendig. Dies ist bei Peer-to-Peer-Netzwerken besonders schwierig, da häufig zusätzliche Peer-Einrichtungen zu dem Netzwerk hinzutreten und andere wiederum ausfallen. Auch verfügen die Peer-Einrichtungen untereinander über verschiedene Leistungsfähigkeiten und Eigenschaften. Es ist dabei auch notwendig, zuverlässige Ausfallmechanismen vorzusehen, die eine kontinuierliche Bereitstellung auch der Werbedienste als Zusatzdienst ermöglichen.

Um nutzerangepasste Werbung im Internet abzusetzen, sind in der Vergangenheit verschiedene Möglichkeiten vorgeschlagen worden. Der Internetbuchhandel "Amazon" stellt einem suchenden Nutzer beispielsweise Artikel- bzw. Bücherangebote zur Verfügung, die andere Nutzer mit denselben Interessen gekauft haben. Dabei wird das Verhalten des suchenden Nutzers protokolliert und mit den Suchprofilen anderer Nutzer abgeglichen. Falls die Suchprofile Ähnlichkeiten aufweisen, werden die entsprechend bereits von anderen Nutzern erstandenen Artikeln auch dem aktuell suchenden Nutzer vorgestellt. Der e-Mail-Dienstanbieter "GMX" bietet gegen Registrierung und Hinterlegung von Nutzerprofildaten kostenlose Webdienste an. Somit können zielgruppenspezifische Werbeelemente angezeigt werden, wenn der entsprechende Nutzer sich auf die Seite von "GMX" einloggt. Die Suchmaschine "Google" verfolgt ein webbasiertes Konzept für nutzerspezifische Werbung, das darauf abstellt, welche vom Nutzer eingegebene Suchbegriffe in dem Datenbankverzeichnis gesucht werden. Die Suchbegriffe liefern jeweils einen Hinweis, wofür sich der Nutzer interessiert, sodass Werbende bestimmte Suchbegriffe kaufen können und bei Aufruf dieser Begriffe ihre Werbeelemente auf der Suchseite dargestellt werden.

Die webbasierte nutzerspezifische Werbung lässt sich nicht auf Peer-to-Peer-Netzwerke übertragen. Bei webbasierter Werbung werden grundsätzlich nur Code-Bestandteile dynamisch in die jeweilige Seite des eigentlichen Inhalteanbieters integriert. Die Werbung ist dabei kein eigenständiger Dienst, über den beispielsweise eine Einblendung von Werbesymbolen in einen Video-Strom vorgenommen werden können. Bei den bekannten Werbekonzepten ist zudem eine zentrale Infrastruktur bzw. der Server des jeweiligen Inhalte- und Werbeanbieters notwendige Voraussetzung für die personalisierte Werbung.

Nachteilig ist somit eine zentrale Verwaltung der Werbeelemente und der Dienstinhalte notwendig, sodass eine flexible Zusammenstellung von Werbung und Inhalt nicht möglich ist. Nachteilig ist auch, dass einzublendende Werbeelemente nur durch die zentralen Server eingestellt werden können, sodass nicht jeder Peer-to-Peer-Teilnehmer die Möglichkeit hat, Zusatzdienste bzw. Werbung einzuspielen. Die Bereitstellung personalisierter Werbung in Peer-to-Peer-Systemen erfordert eine verteilte Zusammenstellung und verteilte Ausführung der Inhalte anbietenden Basisdienste mit den Werbeinhalte bereitstellenden Zusatzdiensten.

Es ist daher eine Aufgabe der vorliegenden Erfindung, ein Verfahren zu schaffen, mit dem Zusatzdienste, insbesondere personalisierte Werbung, in verteilten Peer-to-Peer-Netzwerken erzeugt werden können.

Diese Aufgabe wird durch ein Verfahren gemäß Patentanspruch 1 gelöst.

Demgemäß ist ein Verfahren zum Bereitstellen eines Zusatzdienstes zu einem Basisdienst in einem Peer-Einrichtungen aufweisenden Peer-to-Peer-Netzwerk vorgesehen, wobei der Zusatzdienst in Abhängigkeit von Profilparametern eines Nutzers einer den Basisdienst anfragenden Peer-Einrichtung ausgewählt wird und wobei der Zusatzdienst ein Basisdienstergebnis des Basisdienstes verarbeitet, das Basisdienstergebnis mit zusätzlichen Daten ergänzt und der anfragenden Peer-Einrichtung als Gesamtdienstergebnis übermittelt.

Die Erfindung erlaubt es, variabel Werbeelemente in beliebige Inhalte des Basisdienstes einzubetten. Dabei werden die Werbeinhalte als zusätzliche Daten in die Basisdienstergebnisse integriert und hinter den Basisdienst geschaltet. Durch Berücksichtigung der Profilparameter des Nutzers, welche beispielsweise in dem Peer-to-Peer-Netzwerk für alle Peers verteilt abgespeichert vorliegen können, sind personalisierte Werbeelemente möglich. Ohne eine zentrale Infrastruktur können somit auch internetweit Basisdienstinhalte mit dynamisch integrierter Werbung versehen werden.

Vorzugsweise wird der Zusatzdienst und/oder der Basisdienst von jeweils mindestens einer Peer-Einrichtung des Peer-to-Peer-Netzwerks ausgeführt. Vorzugsweise wird ferner mindestens eine AdvertisementProfileResource in dem Peer-to-Peer-Netzwerk publiziert, wobei die AdvertisementProfileResource den Zusatzdienst beschreibende Zusatzdienstparameter umfasst.

Unter Publizieren wird dabei die verteilte Speicherung von Informationen in dem zugrundeliegenden Peer-to-Peer-Netzwerk verstanden. Es wird auch davon ausgegangen, dass das zugrunde liegende Peer-to-Peer-Netzwerk das verteilte Speichern und Wiederauffinden von Informationen gestattet bzw. ein entsprechendes Kommunikationsprotokoll für die das Peer-to-Peer-Netzwerk bildenden Peer-Einrichtungen vorliegt. Die abgespeicherten Informationen werden auch allgemein als Resourcen bezeichnet und die verteilte Speicherung als das Publizieren von Resourcen.

Es ist damit beispielsweise jedem Teilnehmer des Peer-to-Peer-Netzwerks möglich, Zusatzdienste oder Werbedienste anzubieten und diese durch publizierte Zusatzdienstparameter zu charakterisieren. Dadurch wird ermöglicht, dass aus allen AdvertisementProfileResourcen im Peer-to-Peer-Netzwerk die auf das jeweilige Nutzerprofil bzw. die Profilparameter des Nutzers am besten passende Werbung bzw. der am besten passende Zusatzdienst verwendet wird.

In einer Weiterbildung des Verfahrens wird ferner eine NutzerProfileResource in dem Peer-to-Peer-Netzwerk publiziert, wobei die NutzerProfileResource Profilparameter des Nutzers der den Basisdienst anfragenden Peer-Einrichtung umfasst. Gemäß der Erfindung liegen in dem Peer-to-Peer-Netzwerk NutzerProfileResourcen und AdvertisementProfileResourcen bereit, sodass entsprechende Kombinationen von Peers, welche Basis- bzw. Zusatzdienste ausführen, sowohl für den werbenden als auch für den Nutzer eine personalisierte Werbung ermöglicht. Durch die vom Nutzer bestimmten Profilangaben bleibt es dem Nutzer überlassen, welche Art von Werbung er akzeptieren möchte. Es ist beispielsweise denkbar, dass einem Nutzer der Basisdienst zu einem geringeren Preis bereitgestellt wird, wenn dieser zusätzliche Werbeelemente gemäß seiner Profilparameter zulässt. Die Profilparameter können beispielsweise das Alter des Nutzers, den Ort der durch ihn anfragenden Peer-Einrichtung eine maximale Werbemenge und/oder die Leistungsfähigkeit seiner den Basisdienst anfragenden Peer-Einrichtung umfassen. Die Zusatzdienstparameter der Advertisement Profile Resource können beispielsweise eine Altersgruppe von Zielgruppennutzern des Zusatzdienstes, einen gewünschten Ort der den Zusatzdienst nutzenden Peer-Einrichtungen und/oder eine gewünschte Leistungsfähigkeit von Peer-Einrichtungen umfassen.

Es wird in einer weiteren Variante des erfindungsgemäßen Verfahrens mindestens eine Zusatzdienst-SubtaskResource in dem Peer-to-Peer-Netzwerk publiziert, welche Vergleichsregeln für eine Gegenüberstellung der Profilparameter des Nutzers mit den publizierten Zusatzdienstparametern aufweist. Dies dient dem Bestimmen einer Peer-Einrichtung, welche am besten zur Ausführung eines bestimmten Zusatzdienstes geeignet ist. Bevorzugt werden die Profilparameter des Nutzers mit den Zusatzdienstparametern insbesondere unter Verwendung der Vergleichsregeln verglichen und mindestens eine Peer-Einrichtung zur Ausführung des Zusatzdienstes ausgewählt. Es ist damit möglich, durch Analysieren der AdvertisementProfileResources eine auf das Nutzerprofil passende Werbung als Zusatzdienst einzubinden. Beispielsweise kann zunächst durch eine Altersangabe die Anzahl der Zusatzdienste bereitstellende Peer-to-Peer-Einrichtungen vermindert werden und anschließend die Anzahl von Zusatzdienste anbietenden Peer-Einrichtungen weiter eingeschränkt werden, indem eine bestimmte geographische Angabe wie die Postleitzahl des Nutzers als weiterer Vergleichsparameter verwendet wird. Schließlich wird so eine kleine Auswahl von Peer-Einrichtungen bestimmt, die geeignete Zusatzdienste bzw. Werbung in den vom Nutzer angefragten Basisdienst integrieren können. Jede Peer-Einrichtung dieser Gruppe von Peer-Einrichtungen ist in der Lage, den Zusatzdienst auszuführen. In einem weiteren Schritt kann dann die jeweils am besten geeignete Peer-Einrichtung zur tatsächlichen Ausführung des Zusatzdienstes ermittelt werden.

Vorzugsweise wird dann eine Peer-Einrichtung des Peer-to-Peer-Netzwerkes ausgewählt, insbesondere die den Basisdienst anfragende Peer-Einrichtung oder die den Basisdienst ausführende Peer-Einrichtung, welche zumindest eine Auswahl von Peer-Einrichtungen bestimmt, durch welche der Zusatzdienst ausführbar ist. Diese entscheidet dann anhand der Vergleichsregeln in der ZusatzdienstSubtaskResource, welche Peer-Einrichtungen die Werbung bereitstellen sollen.

In einer besonders bevorzugten Variante des Verfahrens wird der Zusatzdienst und/oder der Basisdienst aus Teildiensten zusammengesetzt, wobei die Peer-Einrichtungen des Peer-to-Peer-Netzwerks Dienstgruppen zuordenbar sind. Jede Dienstgruppe ist dabei durch einen vorgegebenen Teildienst bestimmt, wobei durch jede einer jeweiligen Dienstgruppe zugeordneten Peer-Einrichtung der vorgegebene Teildienst ausführbar ist. Eine ausgewählte Peer-Einrichtung einer Dienstgruppe führt dann den jeweiligen Teildienst aus, wobei von der den Basisdienst anfragenden Peer-Einrichtung eine Abfolge von auszuführenden Teildiensten zur Bereitstellung des Basisdienstes und/oder des Zusatzdienstes und Vorgaben, die den jeweiligen Teildienst ausführenden Peer-to-Peer-Einrichtungen in dem Peer-to-Peer-Netzwerk publiziert wird. Die Auswahl der ausgewählten Peer-Einrichtungen erfolgt in Abhängigkeit von der publizierten Abfolge und den publizierten Vorgaben.

Bei dieser Variante werden die von Peer-Einrichtungen bereitgestellten Teildienste zu dem Basisdienst oder dem Zusatzdienst verkettet. Alle vorliegenden Peer-Einrichtungen werden logischen Gruppen (Dienstgruppen) zugeordnet, welche durch den jeweiligen Teildienst charakterisiert sind. Es ergibt sich dadurch eine Dienstzusammensetzung aus Teildiensten durch die Dienstgruppen. Dabei bezeichnet Dienstgruppe die Anzahl von Peer-Einrichtungen, die prinzipiell in der Lage sind, einen vorgegebenen Teildienst auszuführen. Für die Initialisierung des zusammengesetzten Dienstes und dessen Ausführung ist organisatorisch lediglich eine Verkettung der Gruppen durchzuführen, was erheblich aufwandsgünstiger und zeitlich schneller geschehen kann.

Im einfachsten Fall umfasst der Basisdienst und/oder der Zusatzdienst nur einen Teildienst. Der Basisdienst kann beispielsweise einen Chat-Dienst, eine Voice-over-IP-Anwendung oder einen bildrahmenbasierten Video-Streaming-Dienst umfassen. Der Zusatzdienst ist beispielsweise ein Werbedienst zum Einfügen von Audio-, Text- oder Graphikinformation, insbesondere in Bildrahmen eines Video-Streaming-Dienstes. Denkbar ist beispielsweise das Einblenden oder Einfügen von graphischer Werbung oder Text in die Bildrahmen des als Video-Stream-Dienst ausgebildeten Basisdienst durch den Zusatz- oder Werbedienst.

Vorzugsweise werden zum Bilden einer jeweiligen Dienstgruppe die folgenden Verfahrensschritte durchgeführt:
- Publizieren einer CandidateResource durch die Peer-Einrichtungen, wobei die CandidateResource Informationen über die von der jeweiligen publizierenden Peer-Einrichtung ausführbaren Teildienste und die Leistungsfähigkeit der jeweiligen publizierenden Peer-Einrichtung aufweist;
- Publizieren einer SubtaskResource und/oder der Zusatzdienst-SubtaskResource, welche Informationen über mindestens einen der auszuführenden Teildienste und die zugehörigen Vorgaben aufweist; und
- Auswählen der ausführenden Peer-Einrichtung aus der Dienstgruppe von Peer-Einrichtungen, mittels derer ein vorgegebenen Teildienst ausführbar ist, in Abhängigkeit von der Leistungsfähigkeit und den publizierten Vorgaben an die den jeweiligen Teildienst ausführenden Peer-Einrichtungen.

Durch das verteilte Speichern der CandidateResource, welche beispielsweise eine Liste derjenigen Teildienste aufweist, die von dem publizierenden Peer ausgeführt werden können, ist eine Einordnung aller Peer-Einrichtungen in logische Dienstgruppen möglich. Dabei ist eine jeweilige logische Dienstgruppe durch die Funktion eines Teildienstes definiert. Eine entsprechende Dienstgruppe umfasst dann alle Peer-Einrichtungen, die einen betreffenden Teildienst ausführen können.

Ferner enthalten die publizierten CandidateResources Angaben über die jeweilige Leistungsfähigkeit der publizierenden Peer-Einrichtung, wie z. B. eine Bandbreite, bereitstehender Speicherplatz oder CPU-Leistung.

Durch Publizieren der SubtaskResource ergibt sich dann die Dienstgruppenzugehörigkeit der Peer-Einrichtungen und erlaubt ferner, die Peer-Einrichtungen einer Dienstgruppe hinsichtlich ihrer Leistungsfähigkeit zu ordnen. Es kann die leistungsfähigste Peer-Einrichtung einer Dienstgruppe ausgewählt werden, um den jeweiligen Teildienst tatsächlich auszuführen. Die mit der SubtaskResource publizierten Vorgaben an die jeweiligen Teildienst ausführenden Peer-Einrichtungen werden z. B. in einer sogenannten Komparatorklasse spezifiziert. Dabei enthält die Komparatorklasse Vergleichsregeln, die bei der Auswahl der ausführenden Peer-Einrichtung berücksichtigt werden. Falls beispielsweise für einen Teildienst eine besonders hohe Bandbreite benötigt wird, ist in der Komparatorklasse die Bandbreite als Vergleichsregel unter den der Dienstgruppe zugewiesenen Peers angegeben. Falls dann mehrere Peer-Einrichtungen dieselbe Bandbreite aufweisen, kann in einer weiteren Spezifizierung durch eine weitere untergeordnete Komparatorklasse, beispielsweise auf die CPU-Leistung bezogen, verwendet werden.

Vorzugsweise wird mindestens eine Watchdog-Peer-Einrichtung aus einer jeweiligen Dienstgruppe von Peer-Einrichtungen bestimmt, wobei die Watchdog-Peer-Einrichtung eine Funktion oder Funktionsfähigkeit der den jeweiligen Teildienst ausführenden und ausgewählten Peer-Einrichtung überwacht. Dies kann z. B. durch den Austausch von sogenannten Herzschlag-(Heart Beat) Nachrichten geschehen, die von dem ausführenden Peer an die Watchdog-Peer-Einrichtungen derselben Dienstgruppe gesendet werden. Somit können die Watchdog-Peers einer Dienstgruppe beurteilen, ob der ausführende Peer zuverlässig Teildienstergebnisse bereitstellt und seine Funktionsfähigkeit unbeeinträchtigt ist. Falls der zunächst ausführende Peer ausfällt, übernimmt eine der Watchdog-Peer-Einrichtungen die Ausführung des Teildienstes.

Vorzugsweise wird eine ServiceGroupResource für eine jeweilige Dienstgruppe publiziert, welche Informationen über die aktuelle den Teildienst ausführende, ausgewählte Peer-Einrichtung und/oder die bestimmten Watchdog-Peer-Einrichtungen aufweist. Diese als Zustands-Resource bezeichnete ServiceGroupResource speichert regelmäßig den Zustand, beispielsweise Zwischenergebnisse der Teildienstausführung sowie die Struktur der Gruppe. D. h. die ServiceGroupResource enthält immer aktuelle Informationen über den jeweiligen ausführenden Peer und die überwachende Watchdog-Peer-Einrichtungen. Fällt beispielsweise die zunächst ausführende Peer-Einrichtung aus, liest der am besten bewertete, also nächstleistungsfähigste Watchdog-Peer für die Ausführung des betreffenden Teildienstes die ServiceGroupResource aus und übernimmt die Ausführung des Teildienstes unter Verwendung beispielsweise der Zwischenergebnisse aus der ServiceGroupResource.

Das Publizieren der SubtaskResource, das Auswählen der den jeweiligen Teildienst ausführenden Peer-Einrichtung und/oder das Bestimmen der Watchdog-Peereinrichtungen erfolgt vorzugsweise durch eine den jeweiligen Teildienst anfragende Peer-Einrichtung. Die Beauftragung zur Ausführung des angefragten Teildienstes wird daher zunächst von einer als koordinierende Peer-Einrichtung bezeichnete Peer-Einrichtung durchgeführt.

Zum Initialisieren des mit dem Zusatzdienst ergänzten Basisdienstes werden vorzugsweise die folgenden Verfahrensschritte durchgeführt:
- Publizieren einer ComposedServiceResource, welche die Abfolge der für die Ausführung des Zusatzdienstes und Basisdienstes verwendeten Teildienste, insbesondere eine Identifikation der NutzerProfileResource, Kriterien für die Auswahl der ausführenden Peer-Einrichtungen, eine Verkettung der Teildienste und Ausführungsparameter für die Teildienste, aufweist;
- Publizieren einer SubtaskResource zum Anfragen des in der Abfolge der Teildienste für den Basisdienst zuletzt auszuführenden Teildienstes durch die den Basisdienst anfragende Peer-Einrichtung und Auswählen der Peer-Einrichtung der Dienstgruppe, welche den angefragten Teildienst auszuführen hat;
- Auswählen der den Zusatzdienst auszuführenden Peer-Einrichtung, wobei eine Identifikation der den Zusatzdienst auszuführenden Peer-Einrichtung als Übergabe-Peer-Einrichtung für das Basisdienstergebnis von dem angefragten Teildienst des Basisdienstes in die SubtaskResource für den Teildienst geschrieben wird; und
- Publizieren von weiteren SubtaskResourcen zum Anfragen des jeweils in der Abfolge der Teildienste vorhergehend auszuführenden Teildienstes durch die ausgewählte Peer-Einrichtung, welche den in der Abfolge der Teildienste jeweils nachfolgend auszuführenden Teildienst ausführt, wobei eine Identifikation der den Teildienst anfragenden Peer-Einrichtung als Übergabe-Peer-Einrichtung für ein Teildienstergebnis von dem angefragten Teildienst in die SubtaskResource geschrieben wird, und Auswählen der Peer-Einrichtung der Gruppe, welche den angefragten Teildienst auszuführen hat.

Nachdem die einzelnen Dienstgruppen, also die Ausführung der Teildienste durch die Gruppenzuordnung zuverlässig vorliegt, erfolgt eine Verknüpfung oder Verkettung der Teildienste untereinander durch das sequentielle Publizieren von SubtaskResourcen. Das Vorliegen des jeweiligen zusammengesetzten Dienstes in dem Peer-to-Peer-Netzwerk, welcher zumindest den Werbedienst und den Basisdienst aufweist, wird in Form der ComposedServiceResource publiziert.

Falls ein zusammengesetzter Dienst von einer anfragenden Peer-Einrichtung benötigt wird, liest diese die ComposedServiceResource. In der ComposedServiceResource sind beispielsweise alle Teildienste des zusammengesetzten Dienstes, wie dem Basisdienst, sowie zugehörige Parameter, wie benötigte Leistungs-Ressourcen oder Dienstgüte-Parameter abgelegt. Die einen zusammengesetzen Basisdienst anfragende Peer-Einrichtung kann auch selbst eine ComposedServiceResource publizieren, in der alle Teildienste und benötigten Parameter spezifiziert sind.

Der den Basisdienst anfragende Peer publiziert dann zunächst die SubtaskResource für den zuletzt auszuführenden Teildienst in der Dienstkette für den Basisdienst. Das Teildienstergebnis dieses zuletzt auszuführenden Dienstes wird in der Ausführung des gesamten Dienstes dem ausgewählten Peer, der den Zusatzdienst ausführt, als Basisdienstergebnis übergeben. Dieser den letzten Teildienst des Basisdienstes ausführende Peer koordiniert vorzugsweise auch die Dienstgruppenstruktur der durch den zuvor auszuführenden Teildienst bestimmten Dienstgruppe von Peer-Einrichtungen. Die damit bestimmte ausführende Peer-Einrichtung publiziert dann eine SubtaskResource für den jeweils zuvor auszuführenden Teildienst.

Die Peer-Einrichtung, welche den letzten Teildienst des Basisdienstes ausführt, übernimmt beispielsweise auch die Koordinierung bzw. Auswahl der Peer-Einrichtung, welche den Zusatzdienst ausführt. Dazu erfolgt zunächst eine Auswahl anhand der Vergleichsregeln, welche in der ZusatzSubtaskResource abgelegt sind und der Profilparameter des Nutzers sowie der Zusatzdienstparameter aus den AdvertisementProfileResources. Somit wird eine Werbedienstgruppe zunächst auch in Abhängigkeit von den Werbeanforderungen und Nutzerprofilanforderungen erstellt und anschließend die am besten geeignete Peer-Einrichtung hinsichtlich ihrer Anforderungen an die Werbedienstausführung, z. B. durch Vergleichen der jeweiligen CandidateResources bestimmt.

Diese Verkettung aller benötigten Teildienste oder der durch die Teildienste bestimmten Dienstgruppen erfolgt, bis der zuerst in der Dienstkette für den Basisdienst auszuführende Teildienst entsprechend seiner SubtaskResource bereitgestellt wurde. Damit sind durch die Initialisierung alle die Teildienste ausführenden Peer-Einrichtungen ausgewählt und entsprechende ServiceGroupResources mit den Gruppenstrukturinformationen bekannt. Analog ist eine Zusammenstellung des Zusatzdienstes aus Teildiensten denkbar.

In die SubtaskResourcen können vorzugsweise Informationen über die Anforderungen an die jeweiligen Teildienste, die Verkettung der Teildienste untereinander und insbesondere Identifikatoren der ComposedServiceResourcen geschrieben werden. Ein Identifikator ermöglicht den direkten Zugriff auf die entsprechende Resource in dem Netzwerk. Dabei ist besonders vorteilhaft, dass der Identifikator der ComposedServiceResource für den jeweils nachfolgenden Teildienst einer vorliegenden SubtaskResource gespeichert wird. Denkbar ist auch, dass die in der ComposedServiceResource abgelegten Informationen über die Verkettung der Teildienste über die Publizierung der SubtaskResourcen an alle ausführenden Peer-Einrichtungen für die Teildienste weitergegeben werden.

Nach dem Auswählen der Peer-Einrichtung, welche den in der Abfolge der Teildienste den ersten Teildienst auszuführen hat, wird vorzugsweise eine Initialisierungsnachricht an die den Basisdienst anfragende Peer-Einrichtung gesendet. Damit erkennt die erste, also die den zusammengesetzten Basisdienst anfragende Peer-Einrichtung, dass eine Verkettung aller notwendigen Teildienste erfolgreich durchgeführt wurde. Den Zustand der den derart zusammengesetzten Dienst aus Basis- und Zusatzdienst bildenden Teildienste und/oder auch Zwischenergebnisse dieser Teildienste können durch die den um den Zusatzdienst ergänzten Basisdienst anfragende Peer-Einrichtung mittels einer ComposedServiceStateResource publiziert werden.

Bevorzugt wird nach dem Auswählen aller die jeweiligen Teildienste ausführenden Peer-Einrichtungen eine Ring-Nachricht von der den Basisdienst anfragenden Peer-Einrichtung an die ausgewählte Peer-Einrichtung gesendet, welche den in der jeweiligen Abfolge zuerst auszuführenden Teildienst ausführt, welche dann an die in der Abfolge folgenden Teildienste ausführenden Peer-Einrichtungen die Ring-Nachricht weitersendet, wodurch diese an die den Basisdienst anfragenden Peer-Einrichtung zurückerhält. Dadurch werden die den gesamten Dienst aus Basis- und Zusatzdienst durch ihre Teildienstausführung bildenden Peer-Einrichtungen instantiiert. Bevorzugt wird die Ring-Nachricht in regelmäßigen Abständen zur Überwachung der Ausführung des gesamten Dienstes gesendet, um beispielsweise die zuverlässige Ausführung und das Vorliegen aller Teildienste zu kontrollieren. Ein entsprechendes Ergebnis kann z. B. in der ComposedServiceStateResource aktualisiert werden.

Beim Übertragen der Ring-Nachricht ermittelt eine jeweilige ausführende Peer-Einrichtung die Identifikation der Peer-Einrichtung, welche den in der Abfolge den nachfolgenden Teildienst ausführt, vorzugsweise durch Auslesen der ServiceGroupResource der jeweiligen durch den nachfolgenden Teildienst bestimmten Gruppe. Da in der jeweiligen ServiceGroupResource die Gruppenstruktur abgelegt ist, kann durch Auslesen auch eine Identifikation oder Adresse der jeweiligen ausführenden Peer-Einrichtung bezogen werden.

In einer Variante des Verfahrens werden in der ComposedServiceResource der Zusatzdienst und/oder optionale Teildienste markiert, welche bei der Ausführung der verketteten Teildienste übersprungen werden können. Es ist beispielsweise denkbar, dass alle Peer-Einrichtungen einer durch einen Teildienst bestimmten Gruppen ausfallen und die Kette von Teildiensten unterbrochen würde. Ist ein derartiger Teildienst als optional markiert, kann dieser in der Ausführung übersprungen werden. Dies gilt insbesondere für den als Werbedienst ausgestalteten Zusatzdienst, da auch bei einem Ausfall der Werbung der eigentliche Inhalte vermittelnde Basisdienst für den Nutzer von Belang ist.

Ein markierter optionaler Teildienst in der Abfolge der auszuführenden Teildienste wird dann übersprungen, falls alle Peer-Einrichtungen der durch den optionalen Teildienst bestimmten Dienstgruppe ausfallen. Dabei übermittelt die ausführende Peer-Einrichtung, welche den in der Abfolge vor dem zu überspringenden Teildienst liegenden Teildienst ausführt, ihr Teildienstergebnis an die ausführende Peer-Einrichtung, welche den in der Abfolge nach dem zu überspringenden Teildienst liegenden Teildienst ausführt. Dies kann bei Ausfall der Peer-Einrichtung, die den Werbedienst ausführt, die den Basisdienst anfragende Peer-Einrichtung sein. Dabei ist es möglich, dass eine ausführende Peer-Einrichtung bei einem Ausfall des ihr folgenden Teildienstes die jeweilige ComposedServiceResource liest und eine Identifikation der ServiceGroupResource für die Dienstgruppe, welche durch den in der Abfolge übernächsten Teildienst bestimmt ist, liest. Somit erkennt eine ausführende Peer-Einrichtung, deren Teildienstergebnis nicht an die optional vorgesehene Teildienst ausführende Peer-Einrichtung gesendet werden kann, weil diese ausgefallen ist, dass ihr Teildienstergebnis an die übernächste Peer-Einrichtung in der Dienstkette übermittelt werden muss.

Dasselbe gilt bei Ausfall des Werbedienstes. Dann wird das Teildienstergebnis der letzten Peer-Einrichtung zur Realisierung des Basisdienstes als Basisdienstergebnis direkt an die anfragende Peer-Einrichtung des Nutzers übermittelt.

Vorteilhafterweise wird eine jeweilige ausführende Peer-Einrichtung bei einer Änderung der ServiceGroupResource für die durch den in der Abfolge folgenden Teildienst bestimmten Dienstgruppe automatisch benachrichtigt. Die automatische Benachrichtigung wird auch als Publish-Subscribe-Mechanismus bezeichnet. Der Subscribe-Mechanismus ermöglicht dabei, dass einzelne Peer-Einrichtungen publizierte Resourcen abonnieren oder zeichnen können. Ist eine entsprechende Zeichnung erfolgt, werden die abonnierenden oder zeichnenden Peer-Einrichtungen immer dann benachrichtigt, falls eine Resource publiziert wird oder Änderungen an der Resource vorgenommen wurden. Damit ist sichergestellt, dass immer die aktuellen Gruppenstrukturen bekannt sind.

Es ist ferner denkbar, dass mindestens eine Peer-Einrichtung mehreren Dienstgruppen zuordenbar ist und als ausführende Peer-Einrichtung verschiedene Teildienste ausführt. Durch die erfindungsgemäße Überwachung der Peer-Einrichtungen durch Watchdog-Peers kann eine an mehreren Dienstgruppen oder der Ausführung mehrerer Teildienste beteiligte Peer-Einrichtung zuverlässig überwacht werden. Es ist beispielsweise denkbar, dass eine Peer-Einrichtung abwechselnd verschiedene Teildienste ausführt.

Die Erfindung betrifft ferner ein Computerprogrammprodukt, welches die Ausführung eines entsprechenden Verfahrens zum Bereitstellen eines aus Zusatzdienstes zu einem Basisdienst in einem Peer-to-Peer-Netzwerk auf einer oder mehreren programmgesteuerten Peer-Einrichtungen veranlasst.

Weitere vorteilhafte Ausgestaltungen der Erfindung sind Gegenstand der Unteransprüche sowie der im Folgenden beschriebenen Ausführungsbeispiele.

Die Erfindung wird nun anhand einzelner Ausführungsbeispiele des Verfahrens unter Bezugnahme auf die Figuren näher erläutert.

Es zeigen dabei:
- Figur 1:: eine graphische Darstellung des Aufbaus eines Basis- und Zusatzdienstes;
- Figur 2:: eine graphische Darstellung der Dienstgruppenbildung;
- Figur 3:: eine graphische Darstellung einer beispielhaften Gruppenstruktur;
- Figur 4:: eine graphische Darstellung der Verkettung von Teildiensten zu einem zusammengesetzten Dienst aus Basis- und Zusatzdienst;
- Figur 5:: die Überwachung eines zusammengesetzten Dienstes mittels Ring-Nachrichten;
- Figur 6:: die Ausführung eines zusammengesetzten Dienstes bei Ausfall eines optionalen Teildienstes; und
- Figur 7:: eine mögliche Verkettung von Teildiensten bei mehreren Teildienst ausführenden Peer-Einrichtungen.

In den Figuren sind gleiche bzw. funktionsgleiche Elemente mit denselben Bezugszeichen versehen worden, sofern nichts Anderes angegeben ist.

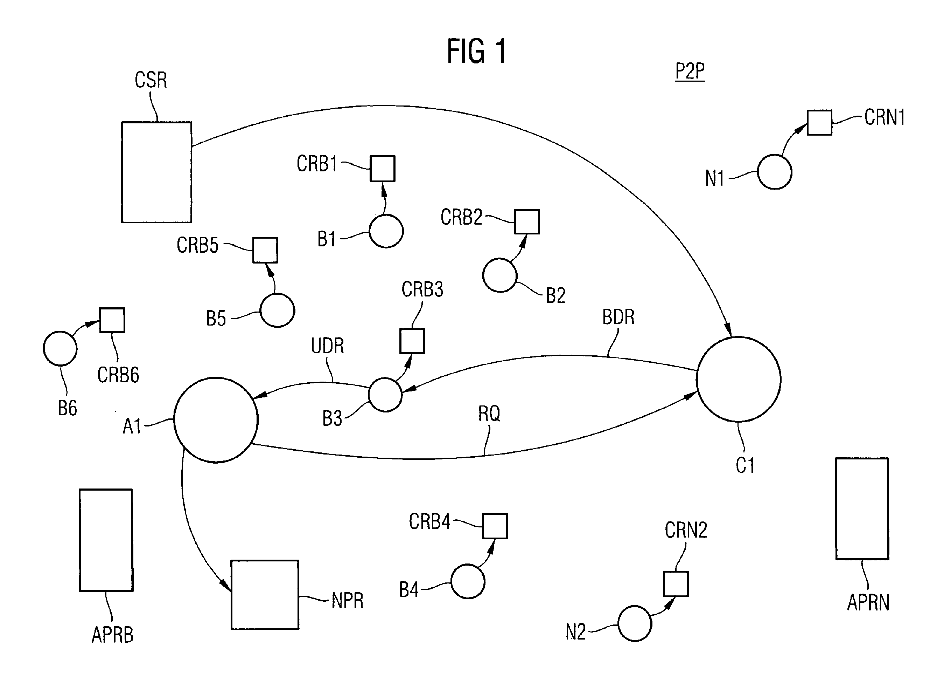

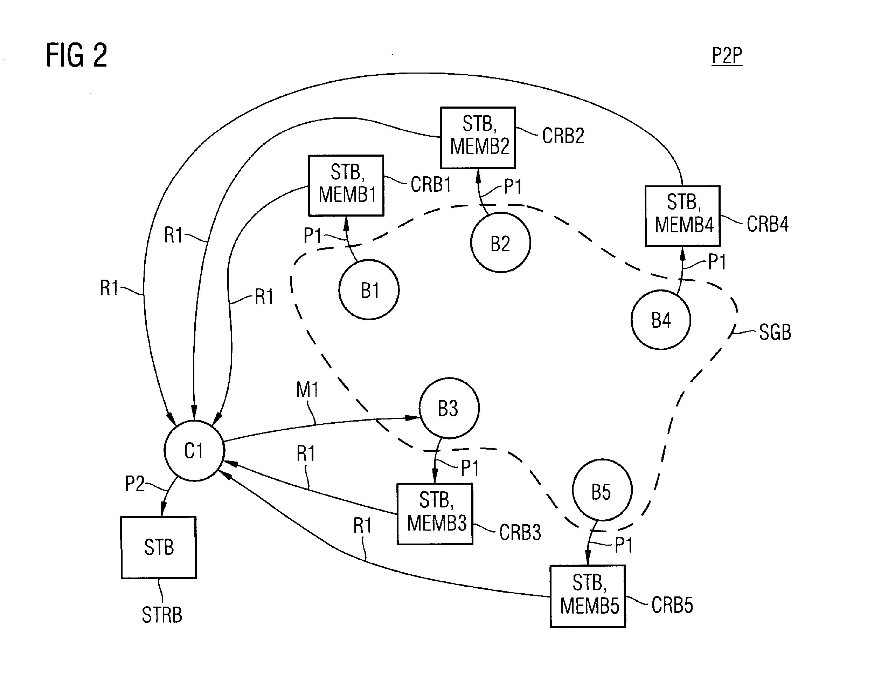

In der Figur 1 ist ein Peer-to-Peer-Netzwerk mit Peer-to-Peer-Einrichtungen A1, B1-B7, C, N1 schematisch dargestellt. Die Peer-Einrichtungen können beispielsweise Dienste anbietende Computer in einem Kommunikationsnetz wie dem Internet sein. Das Peer-to-Peer-Netzwerk-Protokoll stellt eine Kommunikation zwischen den Peer-to-Peer-Einrichtungen bereit und lässt das verteilte Speichern von Daten oder Informationen in dem Peer-to-Peer-Netzwerk zu. Das verteilte Speichern einer Information, die auch als Resource bezeichnet wird, wird als Publizieren bezeichnet. Für Peer-Einrichtungen sind auch die Begriffe Instanz, Endgerät oder Peer geläufig. Jede Peer-Einrichtung A1, B1-B6, C1, N1, N2 in dem Peer-to-Peer-Netzwerk publiziert ihre CandidateResource CRB1-CRB6, CRN1, CRN2. Diese Resourcen werden in Bezug auf die folgenden Figur 2 näher erläutert.

Es wird nun beispielsweise angenommen, dass die Peer-Einrichtung A1 von einem Nutzer verwendet wird, der einen bestimmten Dienst als Basisdienst in dem Peer-to-Peer-Netzwerk P2P in Anspruch nehmen möchte. Dies kann beispielsweise der Anbieter eines Video-Streaming-Dienstes sein, der auf dem Peer C1 beispielsweise einen Film zum Abrufen bereithält. Der Nutzer des Peers A1 ist jedoch bereit, in den Filmverlauf eingebettete Werbeelemente zu akzeptieren und hat so beispielsweise eine geringere Gebühr an den Diensteanbieter zu zahlen.

Die erfindungsgemäße Bereitstellung ermöglicht nun, dass der Filmanbieter oder der Peer C1, welcher das Video-Streaming bereithält, keine zentrale Datenbank aufweisen muss, um beispielsweise eine an die Nutzergewohnheiten des Nutzers des Peers A1 angepasste Werbung einzuspielen. Vielmehr sind auf vielen Peer-Einrichtungen B1-B6, N1, N2 des Peer-to-Peer-Netzwerk P2P Zusatz- oder Werbedienste abgelegt, die es erlauben, Ergänzungen oder Überblendungen auf einzelne Frames eines Video-Streams zu integrieren. Es ist beispielsweise möglich, dass ein entsprechend ausgestalteter Peer einen Video-Stream erhält und in dem Rahmen in bestimmten Zeitabständen Werbebotschaften einfügt. Dies kann beispielsweise eine Telefonnummer für Handy-Klingeltöne oder eine Auskunftstelefonnummer sein. Alle Peer-Einrichtungen, die eine entsprechende Applikation aufweisen, können als Dienstgemeinschaft aufgefasst werden. Diese umfasst die Endgeräte aller Nutzer, die an einem Werbeszenario teilzunehmen bereit sind. Dazu können sich diese Nutzer der Werbedienstgemeinschaft verpflichten im Zuge von Vergünstigungen, beispielsweise geringere Preise für in dem P2P-Netzwerk angebotenen Dienste bestimmte Resourcen ihres Endgeräts für die Ausführung von Werbediensten bereitzustellen.

Die entsprechenden Dienste können als ausführbare Tools auf die Rechner der Dienstgemeinschaft heruntergeladen werden. Die Tools können es ferner ermöglichen, über eine Benutzerschnittstelle einen Werbeinhalt, wie beispielsweise einen Text, einzugeben, der dann als Zusatzdienst bzw. Werbung eingespielt werden kann. Dabei können ferner Zielgruppenparameter eingegeben werden, wie beispielsweise ein maximales Werbebudget oder Eigenschaften der Zielgruppennutzer, wie Alter, Standort oder sonstige standardisierbare Größen oder kategorisierte Interessen. Werbende können auch die Häufigkeit einer jeweiligen Einblendung ihres Werbetextes angeben, sodass eine Einblendungsfrequenz in beispielsweise einem Video-Stream oder die Größe des Werbeelementes eingegeben werden können. Entsprechende Kosten für die Werbung sind somit auch anpassbar.

Ein Werbetreibender stellt zum Beispiel Dienstprogramme in dem P2P-Netzwerk bereit, die, wenn sie auf Peer-Einrichtungen installiert sind, einen bestimmten Zusatz- bzw. Werbedienst ausführen können. Diese Bereitschaft signalisieren die entsprechenden Peers B1-B6, N1, N2 in dem Netzwerk durch publizieren einer entsprechenden CandidateResource CRB1-CRB6, CRN1, CRN2. In dem in Figur 1 dargestellten Beispiel könnten die Peers N1, N2 zum Beispiel eine Texteinblendung mit einer Telefonnummer in einem Videostream vollziehen und die Peer-Einrichtungen B1-B6 die Einblendung eines Logos realisieren.

Von einem Werbeanbieter wird eine jeweilige AdvertisementProfileResource APRB, APRN publiziert. Darin sind entsprechende Zusatzdienstparameter abgelegt, die den jeweiligen möglichen Werbedienst charakterisieren. Ein einfaches Beispiel wäre die Angabe des Alters, Geschlechts und Standort für eine zu bewerbende Zielgruppe. Im Folgenden ist eine beispielhafte XML-Darstellung einer möglichen AdvertisementProfileResource angegeben:

```
 <AdvertisementProfileResource>
         <descriptor>ringtone number advertisement</descriptor>
         <execution>100</executions>
         <lastExecution>
                  <date>13.06.2006</date>
                  <time>1430</time
          </lastExecution>
          <comparator>BestConnectionComparator</comparator>
          <targetGroup>
                  <occupation>student</occupation>
                  <minAge>12</minAge>
                  <maxAge>21</maxAge>
          </targetGroup>
          <terminal>handy<terminal>
          ...
 </advertisementProfileResource>
```

Die obige XML-Darstellung betrifft beispielsweise eine Werbung für einen Klingelton (ringtone number advertisement), die 100 Mal durchgeführt werden soll. Es ist ferner das letzte Datum und der Zeitpunkt der Ausführung des entsprechenden Werbedienstes, eine Vergleichsregel oder Komparator "BestConnectionComparator" angegeben, die angibt, dass eine möglichst stabile und leistungsfähige Verbindung gefordert ist sowie Zielgruppenparameter, wie beispielsweise eine Beschäftigung als Student (occupation), einem Minimum- und Maximumalter (minAge, maxAge) und weitere denkbare Parameter. Ferner kann je nach Ausgestaltung des Peer-to-Peer-Netzwerks auch angegeben werden, welche Art von Endgerät, hier ein Mobiltelefon (handy) für die Ausführung des Werbedienstes geeignet ist. Die in der AdvertisementProfileResource angegebenen Parameter werden als Zusatzdienstparameter bezeichnet.

Sofern ein Nutzer vergünstigte Inhalte eines Basisdienstes durch Inkaufnahme von zwischengeschalteter Werbung beziehen möchte, publiziert er durch seine Peer-Einrichtung (in der Figur 1 durch die Peer-Einrichtung A1 dargestellt) seine NutzerProfileResource NPR. Diese enthält Profilparameter, wie beispielsweise sein Alter und den Beruf.

Der Nutzer möchte beispielsweise vergünstigt einen Video-Film mit für ihn passender Werbung über das Peer-to-Peer-Netzwerk beziehen. In einer ComposedServiceResource CSR ist eine entsprechende Dienstzusammenstellung bzw. Verkettung von in diesem Fall zwei Teildiensten, nämlich der Video-Streaming-Applikation, die vom Peer C1 bereitgestellt wird, und einer Werbedienst-Applikation, die anhand des Nutzerprofils NPR ausgewählt wird, dokumentiert. Die Peer-Einrichtung A1 fragt bei der Peer-Einrichtung C1 den Basisdienst "Video-on-Demand", welcher um den Zusatzdienst Advertisement, d. h. Werbung, ergänzt ist an. Dies ist durch den Pfeil RQ angedeutet. Die entsprechende Dienstzusammenstellung, welche in der ComposedServiceResource CSR abgelegt ist, wird von der Peer-Einrichtung C1 ausgelesen. Im Folgenden ist eine beispielhafte XML-Darstellung angegebene ComposedServiceResource angegeben:

```
 <composedServiceResource>
     <descriptor>video-on-demand with advertisement</descriptor>
     <numberOfSubstasks>2</numberofSubstasks>
     ...
     <subtask>
              <name>advertisement</name>
              <comparator>AdvProfileComparator</comparator>
              <participation>optional</participation>
              ...
     </subtask>
      <subtask>
              <name>video-on-demand</name>
              <comparator>MinimumCostComparator</comparator
              <participation>mandatory</participation>
              ...
     </subtask>
     ...
 </composedServiceResource>
```

Darin sind die durchzuführenden Teildienste, wie in dem hier vorliegenden Fall, der Werbe- und der Video-on-Demand-Dienst angegeben, sowie ist insbesondere der Werbedienst als optional gekennzeichnet. D. h., falls sich keine geeignete Peer-Einrichtung in dem Peer-to-Peer-Netzwerk finden lässt, die einen entsprechenden Werbedienst anbietet, wird dieser Werbedienst übersprungen, sodass eine direkte Ausführung des Video-on-Demand-Dienstes durch die Peer-Einrichtung C1 erfolgt.

Um zunächst den geeigneten Werbedienst auszuwählen, liest die Peer-Einrichtung C1 die NutzerProfileResource NPR des anfragenden Peers A1. Bei der Anfrage RQ des Peers A1 kann dieser beispielsweise einen Identifikator seiner NutzerProfileResource NPR versenden, sodass der Peer C1 diese in der verteilt abgespeicherten Form im Peer-to-Peer-Netzwerk lesen kann. Anschließend liest die Peer-Einrichtung C1, bzw. die entsprechende Applikation, alle publizierten AdvertisementProfileResources APRB, APRN und vergleicht die jeweiligen Zusatzdienstparameter mit den Profilparametern des Nutzers aus der NutzerProfileResource NPR. Es wird nun derjenige Werbedienst ausgewählt, der am besten zu dem Nutzerprofil NPR der anfragenden Peer-Einrichtung passt. D. h. der Zusatzdienst, dessen AdvertisementProfileResource bzw. deren Zusatzdienstparameter am besten mit den Profilparametern des Nutzers übereinstimmen, wird als Teildienst bzw. Zusatzdienst "Werbung einblenden" von der Peer-Einrichtung C1 ausgewählt. Zum Beispiel kann sich bei der Überprüfung herausstellen, dass der der AdvertisementProfileResource APRN entsprechende Werbedienst ungeeignet ist, da die angesprochene Alterszielgruppe von den Altersangaben der NutzerProfile NRP stark abweicht. Dabei kann auch überprüft werden, ob in der jeweiligen AdvertisementProfileResource verzeichnet ist, wie viele bzw. ob überhaupt noch Werbeeinblendungen des jeweiligen Werbedienstes erfolgen sollen. Beispielsweise kann in der AdvertisementResource eine maximale Anzahl von Ausführungen heruntergezählt werden. Bei der Ausführung des jeweiligen Dienstes aktualisiert dann die den konkreten Werbedienst ausführende Peer-Einrichtung die entsprechende AdvertisementProfileResource. Falls es bezüglich der Übereinstimmungen mit der NutzerProfileResource gleichwertige Übereinstimmungen der AdvertisementProfileResourcen gibt, kann z. B. diejenige gewählt werden, deren Dienst am längsten nicht mehr eingeblendet wurde. Weitere Kriterien sind denkbar, nach denen eine Auswahl der Peer-Einrichtung bzw. des jeweiligen Werbedienstes erfolgen soll.

Anschließend muss entschieden werden, welche der Peer-Einrichtungen, die den ausgewählten Werbedienst ausführen können am besten geeignet ist. Dies ist in der Folge näher erläutert.

Figur 2 zeigt eine graphische Darstellung der zu einer Dienstgruppenbildung notwendigen Publizierungs- und Zuordnungsvorgänge in einem Peer-to-Peer-Netzwerk. In der Figur 2 ist eine Auswahl von Peer-Einrichtungen B1-B5, C1 in einem Peer-to-Peer-Netzwerk P2P dargestellt.

Jede Peer-Einrichtung B1-B5, C1 ist dabei in der Lage, einen bestimmten oder mehrere Teildienste auszuführen. Dies kann beispielsweise die Ausführung eines Textchats, eine automatischen Übersetzung von Text, eine Spracherkennung oder eine Text-zu-Sprach-Ausgabe-Funktion, ein Video-Streaming oder insbesondere die Ergänzung von Videodaten mit bestimmten Werbetexteinblendungen sein. Durch Lesen und Bewerten der AdvertisementProfileResources wurde somit bereits eine Vorauswahl aus allen Peers, die Werbedienste ausführen können, getroffen worden. In dem betrachteten Beispielsfall bieten die Peers B1-B5 z. B. auf das jeweilige Nutzerprofil angepasste Werbung an. Jede Peer-Einrichtung B1-B5, C1 in dem Peer-to-Peer-Netzwerk publiziert ihre CandidateResource CRB1-CRB5. Das Publizieren der CandidateResources CRB1-CRB5 ist mittels der Pfeile P1 signalisiert.

In der Figur 2 wird davon ausgegangen, dass die mit B1-B5 bezeichneten Peer-Einrichtungen einen mit STB bezeichneten Teildienst, wie den Werbedienst, ausführen können. Somit enthalten die publizierten CandidateResources CRB1-CRB5 darüber eine Information. Ferner sind in den CandidateResources CRB1-CRB5 Informationen über die Leistungsfähigkeit der Peer-Einrichtungen B1-B5 bei der Teildienstausführung des Dienstes STB angegeben. Dies kann beispielsweise der für die Teildienstausführung bereitstehende Speicherplatz MEMB1-MEMB5 sein.

Bei der Auswahl des den Werbedienst durchführenden Peers können auch Anforderungen an das eingesetzte Endgerät, die Tageszeit oder der gewählte Inhalt oder des Videofilms berücksichtigt werden.

Sobald dieser Peer, der in der Figur 1 der Peer B3 ist, ausgewählt ist, beginnt die Peer-Einrichtung C1 mit der Dienstausführung des Basisdienstes, der hier als rahmenbasiertes Video-Streaming angenommen wird. Ein Basisdienstergebnis BDR, also ein Video-Stream, wird dann an die den Zusatzdienst, also Werbedienst ausführenden Peer-Einrichtung B3 übermittelt, welcher in die Bildrahmen weitere Daten zufügt, wie beispielsweise Text oder Graphikdaten und als Gesamtdienstergebnis UDR dem hier nicht dargestellten Peer A1 übermittelt. Das Gesamtdienstergebnis UDR beinhaltet dann auch die nutzerspezifisch angepasste Werbung gemäß dem in der NutzerProfileResource EMR abgelegten Nutzerprofil.

Es ist auch denkbar, dass eine sogenannte Zusatzdienst-SubtaskResource publiziert wird, in der die Vergleichsregeln zum Bestimmen der am besten geeigneten Peer-Einrichtung für den Werbedienst dargestellt sind. Die dem Nutzerprofil angepasste Werbeeinblendung und Bereitstellung des Basisdienstes kann daher auch als Dienstkette aus Teildiensten aufgefasst werden. Insofern besteht die Verkettung des Basisdienstes, welcher vom Peer C1 ausgeführt wird, mit dem Werbedienst, welcher vom Peer A1 (siehe Figur 1) ausgeführt wird, und dem Darstellungsdienst zur Anzeige des Video-Streams der Nutzerseite, welcher durch den Peer B1 ausgeführt wird, aus drei Teildiensten. Um den Ausfall und das Hinzutreten von Peer-Einrichtungen zu dem Peer-to-Peer-Netzwerk zuverlässig zu verwalten und eine kontinuierliche Dienstausführung der verketteten Dienste zu gewährleisten, werden logische Dienstgruppen gebildet.

Durch Kenntnis der CandidateResources bzw. Kenntnis der Bereitschaft der in dem Peer-to-Peer-Netzwerk P2P vorliegenden Peer-Einrichtungen bestimmte Teildienste auszuführen, besteht eine logische Gruppenzugehörigkeit jeder Peer-Einrichtung. Die Gruppe oder Dienstgruppe SGB umfasst z. B. alle in dem Peer-to-Peer-Netzwerk vorliegenden Peer-Einrichtungen, welche in der Lage sind, den Teildienst STB, wie die Werbungseinfügung, durchzuführen. Dies ist in der Figur 1 durch die gestrichelte Linie um die Peer-Einrichtungen B1-B5 angedeutet.

Figur 2 zeigt die Peer-Einrichtung C1, welche z. B. die Anfertigung des Teildienstes STB wünscht und von dem Peer-to-Peer-Netzwerk P2P anfragen möchte. Diese Anfrage durch die Peer-Einrichtung C1 erfolgt z. B. durch Publizieren einer SubtaskResource STRB. In der SubtaskResource STRB ist festgelegt, dass der Teildienst STB benötigt wird und welche Leistungsanforderungen und Leistungsparameter für die angefragte Teildienstausführung notwendig sind. Die SubtaskResource STRB enthält insbesondere Auswahlregeln, sogenannte Komparatorklassen, die festlegen, nach welchen Kriterien eine zur Ausführung des Teildienstes am besten geeignete Peer-Einrichtung ausgewählt wird. Dies kann z. B. in einer ersten Vorauswahl der größte bereitstehende Speicherplatz sein, und falls mehrere Peer-Einrichtungen dieses Kriterium erfüllen, in einer zweiten Auswahlstufe die bereitgestellte CPU-Leistung. Anhand der SubtaskResource für den Teildienst STRB für den Teildienst STB ist damit die beste möglichste Peer-Einrichtung bestimmbar.

Die den Teildienst anfragende Peer-Einrichtung C1 liest dann in einem Leseschritt R1 die CandidateResources CRB der im Peer-to-Peer-Netzwerk vorliegenden Peer-Einrichtungen. Unter Verwendung der Teildienstbeschreibung STB und der Komparatorklassen in der SubtaskResource STRB entscheidet diese anfragende Peer-Einrichtung C1 beispielsweise, dass die Peer-Einrichtung B3 als leistungsfähigste Peer-Einrichtung der Dienstgruppe SGB den Teildienst STB ausführen soll und teilt dies in einer Nachricht M1 dieser mit. Ferner kann die anfragende Peer-Einrichtung C1 oder die dann zur Ausführung des Teildienstes STB bestimmte Peer-Einrichtung B3 sogenannte Watchdog-Peer-Einrichtungen bestimmen, die die Funktion der ausführenden Peer-Einrichtung B3 überwachen sollen.

Bei der Berücksichtigung der für die Dienstgruppenbildung für den Teildienst B, also beispielsweise dem Werbedienst, sind bereits zuvor bei der Auswahl des Werbedienstes diejenigen Peer-Einrichtungen ausgeschlossen werden, die zwar eine Werbung einblenden können, wobei die Werbung jedoch nicht den Anforderungen an das Nutzerprofil des Anfragenden erfüllt bzw. wobei ein unpassender Werbeinhalt bereitgestellt würde. Insofern wurden in einem ersten Schritt anhand des Nutzerprofils und der AdvertisementProfileResourcen bzw. der veröffentlichten Zusatzdienstparameter in dem P2P-Netzwerk eine Vorauswahl aus den Peer-Einrichtungen getroffen, die bei der Dienstgruppenbildung für den Zusatzdienst berücksichtigt werden.

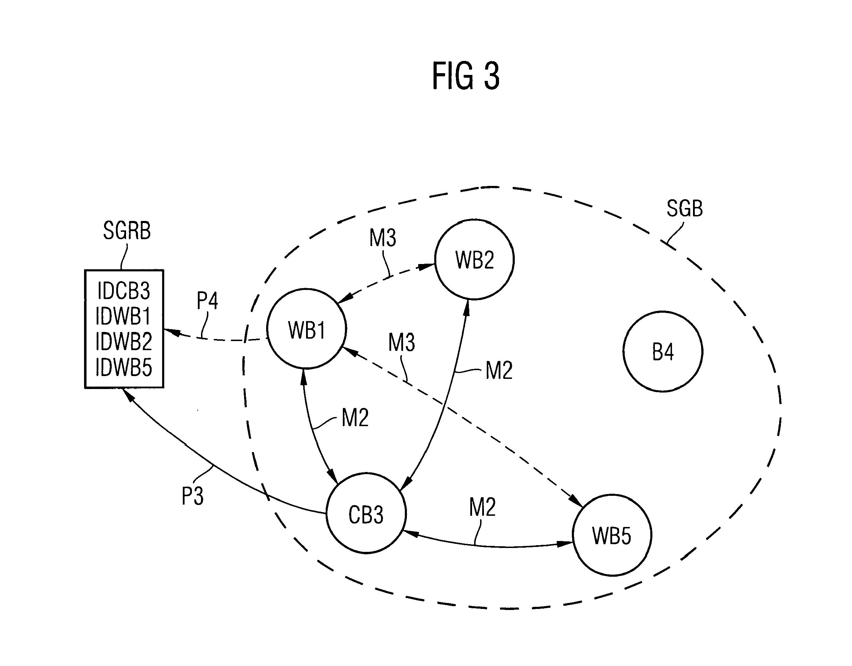

In der Figur 3 ist eine ausgebildete Dienstgruppenstruktur schematisch dargestellt. Die Dienstgruppe SGB umfasst die bereits in der Figur 2 dargestellten Peer-Einrichtungen B1-B5. Als die den Teildienst, z. B. den Werbedienst STB ausführende Peer-Einrichtung, welche für die Ausführung als Leistungsfähigste klassifiziert wurde, wurde die Peer-Einrichtung B3 gewählt, welche als koordinierende Peer-Einrichtung CB3 bezeichnet wurde. Die für die Teildienstausführung nächstleistungsfähigsten Peer-Einrichtungen B1, B2, B5 wurden als Watchdog-Peer-Einrichtungen WB1, WB2, WB5 bezeichnet. Die Watchdog-Peer-Einrichtungen WB1, WB2, WB5 erhalten von der ausführenden oder koordinierenden Peer-Einrichtung CB3 kontinuierlich Nachrichten M2 und überwachen somit die zuverlässige Funktion des aktuellen ausführenden Peers CB3. Die Überwachungsnachrichten werden auch als Herzschlagnachrichten M2 bezeichnet.

Die entsprechende Gruppenstruktur wird durch Publizieren einer SerivceGroupResource SGRB dokumentiert. Die jeweils koordinierende Peer-Einrichtung CB3 initiiert das verteilte Speichern bzw. Publizieren P3 der ServiceGroupResource SGRB. Diese enthält z. B. die Identifikationen der für die Service- oder Dienstgruppe SGB bestimmte ausführende Peer-Einrichtung IDC3 und der jeweiligen Watchdog-Peer-Einrichtungen IDWB1, IDWB2. Damit ist in der ServiceGroupResource SGRB die vollständige Struktur der den Teildienst STB ausführenden Gruppe abgelegt.

Falls nun der ausführende Peer CB3 beispielsweise durch einen Defekt ausfällt, erkennt die in der Rangfolge der Leistungsfähigkeit für die Teildienstausführung zweitbeste Watchdog-Peer-Einrichtung, beispielsweise WB1, dies durch Ausfall der Herzschlagnachricht M2. In diesem Fall übernimmt die Watchdog-Peer-Einrichtung WB1 die Funktion der koordinierenden Peer-Einrichtung und die Ausführung des Teildienstes STB. Ferner übermittelt die dann als koordinierende Peer-Einrichtung arbeitende Peer-Einrichtung B1 entsprechende Nachrichten an die anderen Watchdog-Peer-Einrichtungen WB2, WB5 und aktualisiert durch Publizieren P4 die ServiceGroupResource SGRB. Diese für den Ausfall der aktuellen koordinierenden bzw. ausführenden Peer-Einrichtung CB3 notwendigen Maßnahmen sind durch die gestrichelten Pfeile angedeutet.

Durch die Gruppenstruktur mit Watchdog-Peers ist es damit möglich, immer zuverlässig die Ausführung eines Teildienstes zu gewärleisten. Ferner ist die Gruppenstruktur immer aktuell durch die publizierte ServiceGroupResource angegeben.

Eine Änderung der Gruppenstruktur kann auch dann notwendig sein, wenn durch Publizieren einer CandidateResource ein neuer Peer zu der Dienstgruppe SGB hinzutritt und dieser eine für die Ausführung des Teildienstes günstigere Leistungsfähigkeit besitzt. Der jeweils koordinierende Peer CB3 kann die CandidateResources der der Dienstgruppe zugeordneten Peer-Einrichtungen zeichnen bzw. abonnieren und wird damit über das Vorliegen einer besseren Peer-Einrichtung informiert. Die Bewertung der Peer-Einrichtungen hinsichtlich ihrer Leistungsfähigkeit und anhand der SubtaskResource abgelegten Komparatorklassen kann somit auch während des Betriebs, also während der Ausführung des Teildienstes, geschehen.

Eine erfindungsgemäße logische Dienstgruppe führt somit den vorgegebenen Teildienst ausfallsicher durch, und bei der Auswahl des jeweils ausführenden Peers sind Parameter wie die benötigten Ressourcen, Dienstgüten oder Nutzeranforderungen leicht zu berücksichtigen. Es ist damit z. B. eine ausfallsichere Werbeeinblendung und Basisdienstausführung gewährleistet.

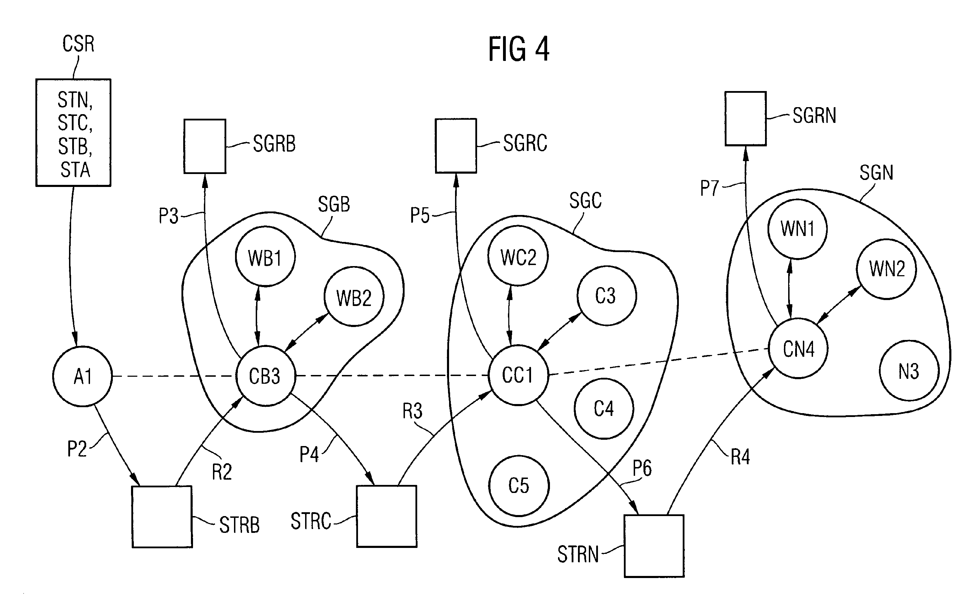

In Figur 4 ist ausgehend von der Dienstgruppenbildung für auszuführende Teildienste eine Variante des Verfahrens zum Bereitstellen eines zusammengesetzten Dienstes, beispielsweise als ein Basisdienst, schematisch dargestellt. In dem betrachteten Beispiel wird davon ausgegangen, dass eine einen zusammengesetzten Basisdienst anfragende Peer-Einrichtung A1 mehrere Teildienste, welche sukzessiv durchgeführt werden, benötigt.

Ein Beispiel für einen zusammengesetzten Basisdienst könnte ein Textchat, auf den von einem PDA aus zugegriffen wird, sein. Beispielsweise wird bei einer Autofahrt dann eine Sprachausgabe des Textchats benötigt. Insofern sind miteinander zu verkettende Teildienste die Textchat-Applikation, eine beispielsweise optionale automatische Übersetzung in eine andere Sprache, und abschließend die Sprachausgabe des übersetzten Textes. In dem betrachteten Beispiel wird mit STA die PDA-Applikation bezeichnet, mit dem Teildienst STB die Umwandlung von Text in Sprache, mit dem Teildienst STC die Übersetzung von einer Ausgangssprache in eine Zielsprache und mit Teildienst STN die Textchat-Applikation.

Eine Initiierung des zusammengesetzten Dienstes in dem Peer-to-Peer-Netzwerk erfolgt zunächst durch Lesen einer ComposedServiceResource CSR, die die für den zusammengesetzten Dienst notwendigen Teildienste aufführt, weitere Dienstgüteparameter und die Verkettung der Teildienste untereinander bestimmt. Im Folgenden ist beispielsweise eine XML- Darstellung für eine mögliche ComposedServiceResource angegeben:

```
 <composedServiceResource>
          <descriptor>advanced textchat</descriptor>
          <numberOfSubstasks>3</numberOfSubstasks>
          ...
          <subtask>
                <name>text-to-speech</name>
                <comparator>Maximum/CpuComparator</comparator>
                <participation>mandatory</participation>
                ...
          </subtask>
          <subtask>
                <name>translation</name>
                <comparator>MaximumMemoryComparator</comparator
                <participation>optional</participation>
                ...
          </subtask>
          <subtask>
                <name>textchat</name>
                <comparator>BestConnectionComparator</comparator>
                <participation>mandatory</participation>
                ...
          </subtask>
          ...
 </composedServiceResource>
```

In der ComposedServiceResource CSR sind die verschiedenen Teildienste als "advanced textchat" STA, "text-to-speech" STB, "translation" STC und "textchat" STN bezeichnet. Ferner sind die Komparatorklassen bzw. Auswahlregeln für die jeweils auszuführenden Peer-Einrichtungen der Dienstgruppen hinsichtlich der CPU-Leistungsfähigkeit (MaximumCPUComparator), dem Speicherplatz (MaximumMemoryComparator) und der Bandbreite (BestConnectionComparator) angegeben. Darüber hinaus sind die Teildienste in optionale Teildienste, hier der Übersetzungsteildienst STC und zwingend auszuführende Teildienste, hier die Text-zu-Sprach-Ausgabe STB und der Textchat selbst STN angegeben. Selbstverständlich kann auch ein Werbedienst- bzw. Zusatzdienst als Teildienst aufgefasst werden.

Die den zusammengesetzten Dienst anfragende Peer-Einrichtung A1 liest diese ComposedServiceResource und publiziert daraufhin die für den gemäß in der ComposedServiceResource angegebenen Abfolge von Teildiensten zuvor auszuführenden Teildienst notwendige SubtaskResource STRB. Wie bereits hinsichtlich der Figuren 2 und 3 ausgeführt wurde, koordiniert die anfragende Peer-Einrichtung A1 zunächst die Gruppenbildung SGB, wodurch die Peer-Einrichtung B3 als koordinierende bzw. als ausführende Peer-Einrichtung CB3 bestimmt wird und die beiden Peer-Einrichtungen B1, B2 als Watchdog-Peer-Einrichtungen WB1, WB2 eingesetzt werden.

In der publizierten SubtaskResource STRB sind beispielsweise alle Teildienste STN, STC, STB, STA des zusammengesetzten Dienstes sowie die Komparatorklassen enthalten. Ferner ist jeweils der Identifikator der bereits publizierten ServiceGroupResourcen, in dem hier vorliegenden Fall die ServiceGroupResource der Peer-Einrichtung A1, abgelegt. Die den Teildienst STB ausführende Peer-Einrichtung CB3 veröffentlicht nach erfolgreicher Gruppenkoordinierung ihre entsprechenden ServiceGroupResource SGRB ihrer Gruppenstruktur.

Da der koordinierenden Peer-Einrichtung CB3 aus der SubtaskResource STRB der in der Abfolge der Teildienste zuvor auszuführende Teildienste bekannt ist, übernimmt die Peer-Einrichtung CB3 die initiale Koordinierung für die Dienstgruppe SGC. Sie veröffentlicht somit eine entsprechende SubtaskResource STRC in Schritt P4 und bestimmt anhand der in der SubtaskResource STRC angegebenen Komparatorklassen bzw. Vergleichskriterien die Peer-Einrichtung C1 für die bestmögliche Ausführung des Teildienstes STC. Die aus der Dienstgruppe SGC beste Peer-Einrichtung C1 wird als ausführende Peer-Einrichtung CC1 bezeichnet. Ferner wird wiederum eine oder mehrere Watchdog-Peer-Einrichtungen WC2 bestimmt, und die koordinierende Peer-Einrichtung CC1 liest die SubtaskResource STRC in Schritt R3 und veröffentlicht anschließend die Gruppenstruktur in Schritt P5 als die der Dienstgruppe SGC zugewiesene ServiceGroupResource SGRC.

Anschließend publiziert die ausführende Peer-Einrichtung CC1 der Service- oder Dienstgruppe SGC die SubtaskResource STRN für den zuvor auszuführenden Teildienst STN in Schritt P4. Die SubtaskResource STRN für die Ausführung und Bildung der durch den Teildienst STN bestimmten Dienstgruppe SGN enthält nun die Identifikationen aller ServiceGroupResourcen SGRB und SGRC, sowie die entsprechenden Parameter für die Strukturierung der Dienstgruppe SGN.

Wiederum übernimmt die ausführende Peer-Einrichtung der Folgegruppe, also die Peer-Einrichtung CC1, die anfängliche Koordinierung der Gruppe SGN. Diese bestimmt die Peer-Einrichtung N4 als ausführende Peer-Einrichtung und die Peer-Einrichtungen N1, N2 als Watchdog-Peers WN1, WN2. Die ausführende Peer-Einrichtung CN4 liest in Schritt R4 die SubtaskResource STRN aus und publiziert nach der Entscheidung über die Watchdog-Peers in Schritt P7 eine entsprechende ServiceGroupResource SGRN.

Die nunmehr zuletzt gebildete Dienstgruppe SGN bzw. deren koordinierende und den Teildienst STN ausführende Peer-Einrichtung CN4 erkennt, dass alle für den zusammengesetzten Dienst notwendigen Teildienste bzw. die ausführenden Peer-Einrichtungen CB3, CC1 und CN4 bestimmt wurden. Die Verkettung der Teildienste miteinander bzw. die Verkettung der die Teildienste ausführenden Peer-Einrichtungen ist durch die gestrichelte Linie dargestellt.

Ein besonderer Vorteil dieses erfindungsgemäßen Verfahrens zum Aufbau des verketteten zusammengesetzten Dienstes aus Teildiensten STA, STB, STC, STN besteht darin, dass die initiale Koordinatorfunktionalität für die Dienstgruppenbildung auf mehrere Peer-Einrichtungen verteilt wird. Die anfragende Peer-Einrichtung A1 übernimmt die initiale Koordination für die letzte Dienstgruppe SGB. Die dann ausführende Peer-Einrichtung CB3 der letzten Dienstgruppe übernimmt die initiale Koordination der jeweiligen Vorgängergruppe SGC usw. Es ist dabei unproblematisch, dass, wenn der jeweilige Koordinator, der ausführende Peer der Folgegruppe, ausfällt. Durch die redundant vorgehaltenen Watchdog-Peers wird dennoch die weitere Funktionsfähigkeit bzw. die Ausführung des Teildienstes gewährleistet.

Sobald der zuletzt ausgewählte ausführende Peer CN4, welcher den in der Abfolge zuerst auszuführenden Teildienst STN ausführt, bestimmt wurde, sendet dieser eine Initialisierungsnachricht INIT an den den zusammengesetzten Dienst anfragenden Peer A1.

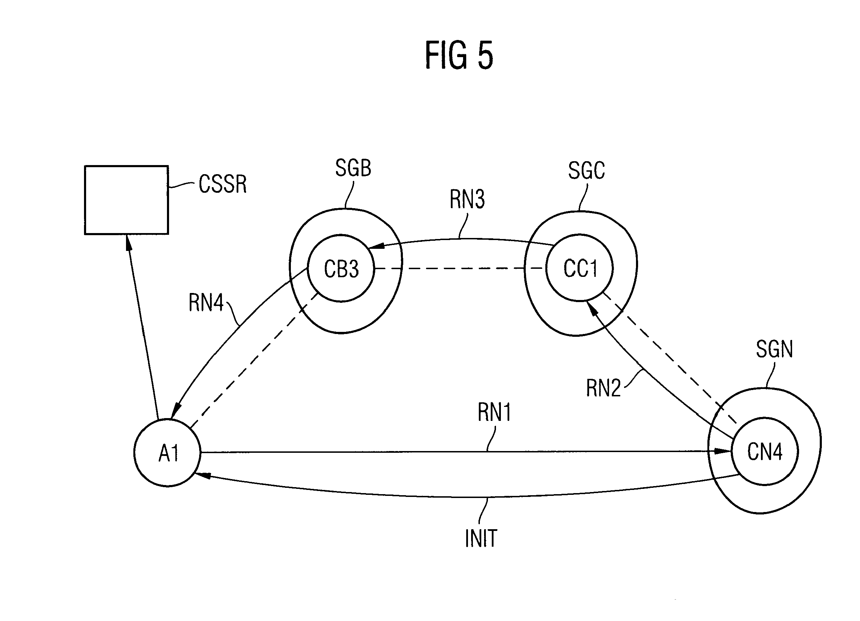

Dies ist in der Figur 5 dargestellt. Der den zusammengesetzten Dienst anfragende Peer A1 empfängt die Initialisierungsnachricht INIT von dem Peer CN4. Daraufhin wird eine Ring-Nachricht RN1, RN2, RN3, RN4 versendet. Ein erster Bestandteil der Ring-Nachricht RN1 wird von der den zusammengesetzten Dienst anfragenden Peer-Einrichtung A1 an die Peer-Einrichtung CN4 gesendet, welche den ersten Teildienst STN in der durch die ComposedServiceResource festgelegten Reihenfolge auszuführen hat. Diese Peer-Einrichtung CN4 sendet einen zweiten Teil der Ring-Nachricht RN2 an den koordinierenden bzw. ausführenden Peer CC1, welche den auf den Teildienst STN folgenden Teildienst STC durchführt. Einen weiteren Teil der Ring-Nachricht RN3 sendet die Peer-Einrichtung CC1 an die Peer-Einrichtung CB3, welche den Teildienst STB durchführt. Schließlich erhält die Peer-Einrichtung A1 den letzten Teil der Ring-Nachricht RN4 von der Peer-Einrichtung CB3. Die Ring-Nachricht durchläuft daher im Kreis ausgehend von der anfragenden Peer-Einrichtung A1 in der Reihenfolge der Abfolge der auszuführenden Teildienste die jeweiligen ausführenden Peer-Einrichtungen CN4, CC1, CB3 und an die anfragende Peer-Einrichtung A1 zurück. Im Rückgriff auf die in Figur 1 dargestellte Situation könnte die Dienstgruppe SGB beispielsweise Werbeeinfügungen durchführen.

Jede Peer-Einrichtung liest dabei die Adresse der jeweiligen ausführenden Peer-Einrichtung des folgenden Teildienstes aus der entsprechenden ServiceGroupResource. Beispielsweise liest die Peer-Einrichtung CC1 die ServiceGroupResource SGRB für die Dienstgruppe SGB. Vorzugsweise hat die Peer-Einrichtung CC1 dabei die ServiceGroupResource SGRB gezeichnet, sodass sie ständig über Änderungen informiert wird. Somit wird auch berücksichtigt, dass, falls ein ausführender Peer in einer der Dienstgruppen SGN, SGC, SGB ausfällt, ein neu ausführender Peer mit einer neuen Adresse vorliegt. Die Teile der Ringnachricht RN1, RN2, RN3, RN4 starten die Instantiierung des zusammengesetzten Dienstes.

Zur Überwachung der Ausführung des zusammengesetzten Dienstes wird die Ring-Nachricht RN1, RN2, RN3, RN4 regelmäßig entlang der ausführenden Peer-Einrichtungen versendet. Falls eine Verbindung zwischen Peers unterschiedlicher Dienstgruppen unterbrochen wird oder auch eine gesamte Dienstgruppe ausgefallen ist, wird dies erkannt. Die anfragende Peer-Einrichtung A1 publiziert dabei eine ComposedServiceStateResource, in der der Betriebszustand und beispielsweise Zwischenergebnisse abgelegt sind.

Falls ein Teildienst vollständig ausfällt, d. h. alle der Gruppe zugehörigen Peer-Einrichtungen ausfallen, kann der zusammengesetzte Dienst in der Regel nicht aufrechterhalten werden und muss abgebrochen werden. Dies wird dann in der ComposedservicestateResource durch die anfragende Peer-Einrichtung A1 dokumentiert. Es ist allerdings möglich, dass bestimmte Teildienste als optional gekennzeichnet oder markiert werden. Dies ist in der oben dargestellten beispielhaften XML-Form einer ComposedServiceResource für den Übersetzungsdienst STC der Fall.

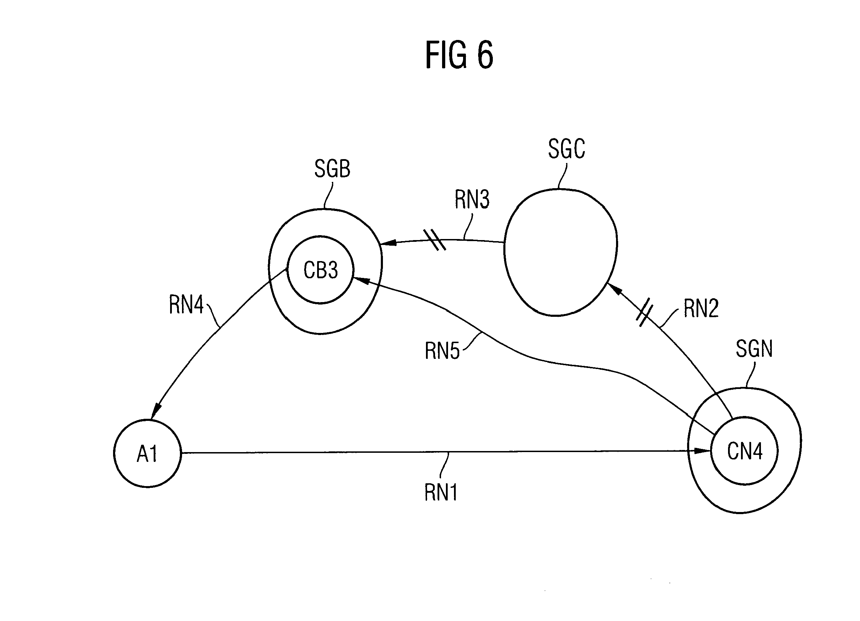

In der Figur 6 ist schematisch eine entsprechende Ausfallsituation dargestellt. Es liegen keine Peer-Einrichtungen mehr im Peer-to-Peer-Netzwerk vor, die den Übersetzungsteildienst STC ausführen können. Somit weist die Dienstgruppe SGC keine Mitglieder mehr auf. Bei der Versendung der Ring-Nachricht entfallen somit die Teilnachrichten RN2 und RN3. Da die Peer-Einrichtung CN4 die ServiceGroupResource SGRC gezeichnet hat, erkennt die Peer-Einrichtung CN4, dass die Gruppe ausfällt, da z. B. über ein Verfallintervall keine Aktualisierung mehr erfolgte. Ferner hat die Peer-Einrichtung CN4 mittels ihrer SubtaskResource STRN Kenntnisse über die Optionalität des Teildienstes STC.

Da in der SubtaskResource STRN ferner die Identifikation der übrigen ServiceGroupResourcen, insbesondere der ServiceGroupResource SGRB für die Dienstgruppe SGD vorhanden sind, kann die Peer-Einrichtung CN4 eine veränderte Ring-Nachricht RN5 direkt an die Peer-Einrichtung CB3 senden, sodass ein rudimentärer zusammengesetzter Dienst ohne die automatische Übersetzung weiterhin möglich ist. Der optionale Charakter des Teildienstes STC wird während der schrittweisen Gruppeninitiierung durch die SubtaskResourcen STRB, STRC, STRN weitergereicht. Ähnlich kann bereits bei der Initiierungsphase vorgegangen werden, wenn ein koordinierender Peer feststellt, dass keine publizierten CandidateResourcen vorliegen, die dem angefragten Teildienst entsprechen. Insbesondere bei nicht auffindbaren Werbediensten mit passenden Zusatzdienstparametern ist dies der Fall. Ein Werbedienst kann beispielsweise ausfallen, wenn das in der AdvertisementProfileResource angegebene Werbebudget überschritten ist (bzw. die maximale Anzahl von Einblendung bereits erfolgt ist). Der das Basisdienstergebnis liefernde Peer kann dann erneut einen Vergleich der bereitstehenden AdvertisementProfileResources vornehmen und eine alternative Auswahl von Werbe-Peers bestimmen, die den "zweitbesten" Zusatzdienst ausführen können. Anschließend erfolgt dann erneut die Dienstgruppenbildung auf Basis der zur Ausführung des dann bestimmten Zusatzdienstes geeigneten Peers.

Falls eine letzte Peer-Einrichtung einer Gruppe ausfällt, wird die entsprechende ServiceGroupResource nicht weiter aktualisiert. Daher bietet sich der Einsatz von Verfallsintervallen an, nach denen eine ServiceGroupResource nicht mehr berücksichtig wird und der Ausfall eines gesamten Teildienstes diagnostiziert wird.

Falls eine Dienstgruppe vollständig ausfällt, ist die Abarbeitung bzw. die Ausführung des Teildienstes meist nicht beendet. Falls eine Peer-Einrichtung der entsprechenden Dienstgruppe erneut verfügbar ist, also online geht, versucht diese Peer-Einrichtung, aufgrund der Zustands-Resource, z. B. der ComposedServiceStateResource CSSR, die Abarbeitung wiederaufzunehmen. Daher wird die ComposedServiceStateResource überprüft und es wird festgestellt, ob der zusammengesetzte Dienst insgesamt noch abläuft. Falls dies der Fall ist, erkennt die hinzutretende Peer-Einrichtung, dass es sich bei seiner Dienstgruppe um einen optionalen Teildienst handelt. Ansonsten hätte der zusammengesetzte Dienst beendet werden müssen. Ist die Ausführung des zusammengesetzten Dienstes jedoch eingestellt worden, publiziert die neu hinzutretende Peer-Einrichtung ihren Abarbeitungszustand des Teildienstes beispielsweise durch Überschreiben der ServiceGroupResource auf beendet. Ansonsten nimmt er die Ausführung des zugewiesenen Teildienstes wieder auf. Dann ist er als einziger Peer der Dienstgruppe der Koordinator und aktualisiert die ServiceGroupResource regelmäßig. Dadurch wird der ausführende Peer der Vorgängergruppe, welcher die ServiceGroupResource zeichnet, über die Wiederaufnahme des optionalen Teildienstes informiert. Daraufhin ist eine Aktualisierung der Verbindung möglich und ein erneutes Einfügen des Teildienstes, beispielsweise des Dienstes STC möglich. Somit ergibt sich dann auch wieder eine geschlossene Kette durch die Ring-Nachrichten RN2 und RN3.

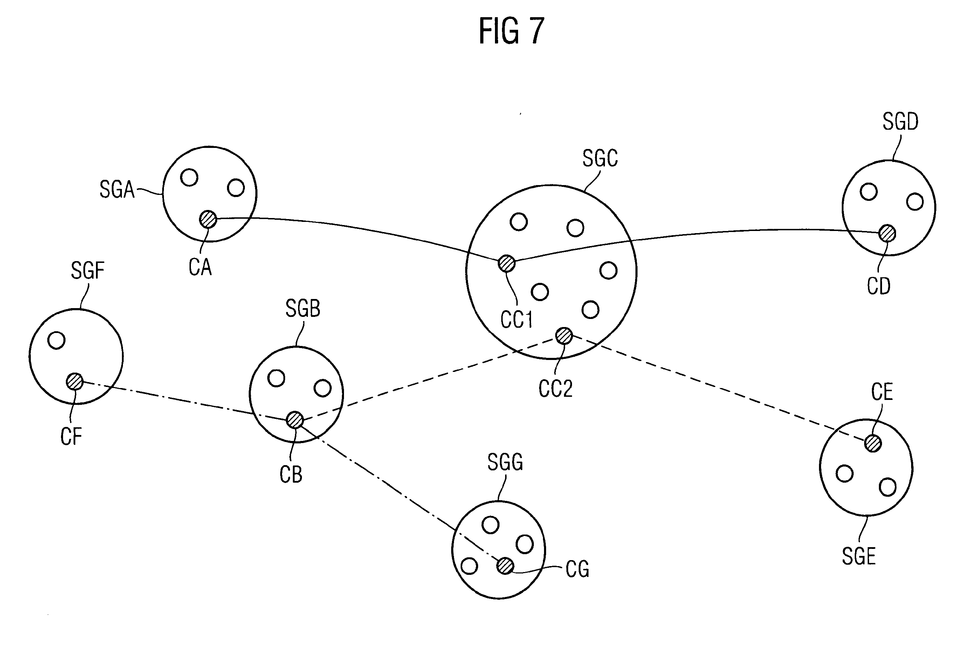

In Figur 7 sind Beispiele der parallelen Nutzung von Peer-Einrichtungen als ausführende Peer-Einrichtungen und die Teilnahme bzw. Ausführung von Teildiensten an mehreren zusammengesetzten Diensten illustriert.

Es sind mehrere Dienstgruppen SGA-SGG dargestellt, die jeweils Peer-Einrichtungen umfassen, die prinzipiell in der Lage sind, einen oder mehrere Teildienste aus den Teildiensten STA-STG auszuführen. Die jeweiligen koordinierenden Peer-Einrichtungen bzw. den jeweiligen Teildienst ausführenden Peer-Einrichtungen CA-CG, CC1, CC2 sind durch einen geschlossenen Kreis dargestellt.

Ferner sind drei Dienstverkettungen, also Abfolgen von nacheinander durchzuführenden Teildiensten, durch eine durchgezogene Linie, eine gestrichelte Linie und eine gestrichpunktete Linie angedeutet. Ein erster zusammengesetzter Dienst wird beispielsweise durch die von den Peer-Einrichtungen cA, CC1 und CD ausgeführten Teildiensten STA, STC und STD bereitgestellt. Eine zweite Verkettung betrifft die Teildienste STB, STC und STE, wobei die Peer-Einrichtungen CB, CC2 und CE die jeweiligen Teildienste ausführen. Als dritter zusammengesetzter Dienst ist eine Verknüpfung der Teildienste STF, STB und STG angegeben, wobei die Peer-Einrichtungen CF, CB und CG die jeweiligen Teildienste ausführen. Dabei nimmt z. B. die Peer-Einrichtung CB an zwei verschiedenen zusammengesetzten Diensten teil. Dies ist beispielsweise möglich, wenn die Teildienstausführung für den zusammengesetzten Dienst, welcher aus einer Verkettung der Dienste STB, STC und STE besteht, nicht zeitgleich mit der Teildienstausführung des Teildienstes STB für die Verkettung von STF, STB und STG erfolgen muss.

Es ist auch wie hinsichtlich der Dienstgruppe SGC dargestellt ist, möglich, dass in einer Dienstgruppe zwei ausführende Peer-Einrichtungen CC1 und CC2 vorliegen, die parallel den Teildienst STC ausführen.

Die Erfindung schafft somit eine dezentrale Lösung für die Auswahl und Zusammenstellung von Inhalten und Werbediensten. Die Auswahl eines geeigneten Werbedienstes oder Zusatzdienstes erfolgt flexibel in Abhängigkeit von Nutzerprofilen, Endgeräten und von dem Nutzer abgefragten Inhalten. Durch die Auswahl der Peers durch Vergleich des Nutzerprofils mit dem publizierten AdvertisementProfileResources wird immer der am besten geeignete Werbedienst zur Ausführung gewählt und anschließend im Rahmen der Dienstgruppenkoordination die entsprechende Peer-Einrichtung zur Ausführung bestimmt. Falls Peers bei der Ausführung, insbesondere der Werbung, ausfallen, wird durch das dargestellte Dienstgruppenkonzept rasch ein Ersatzpeer mit identischem Werbeinhalt ausgewählt. Auch wenn für das vorgegebene Nutzerprofil kein passender Werbedienst existiert, erfolgt eine Initiierung des Basisdienstes durch die Markierung des Werbedienstes als optional in der ComposedServiceREsource. Tritt während der Ausführung des Inhaltedienstes, also des Basisdienstes ein geeigneter Peer zur Werbedienstausführung in das Peer-to-Peer-Netzwerk, kann dieser einfach integriert werden, da der den Basisdienst bereitstellende Peer z. B. regelmäßig alle im Peer-to-Peer-Netzwerk vorliegenden AdvertisementProfileResources abfragen oder abonnieren kann.

Dabei ist eine absolut dezentrale und ausfallsichere Lösung für die Bereitstellung von zusammengesetzten Diensten aus Teildiensten in einem Peer-to-Peer-Netzwerk gewährleistet. Vorteilhaft werden bei der Zusammenstellung und Bereitstellung des aus Basis- und Zusatzdienst zusammengesetzten Dienstes nicht alle möglichen Verkettungspfade unter allen Peer-Einrichtungen des Netzwerkes hinsichtlich ihrer Dienst- und Benutzeranforderungen verglichen, sondern nur noch diejenigen Peers, die einen vorgegebenen Teildienst ausführen können. Damit reduziert sich die Komplexität der Initiierung des zusammengesetzten Dienstes von einer mindestens exponentiellen Laufzeit eines NP-vollständigen Pfadfindungsproblems nur noch auf ein Auswahlproblem innerhalb der jeweiligen Dienstgruppen. Eine Initiierung des zusammengesetzten Dienstes erfolgt dabei verteilt und praktisch ausfallsicher.

Während der Ausführung der Dienste wird jeder Teildienst zu jeder Zeit von einem bestmöglichen Peer ausgeführt. Dabei können die Anforderungen auch an eine Teildienstausführung flexibel für unterschiedliche zusammengesetzte Dienste veränderliche Nutzeranforderungen und Kontexte bestimmt werden. Somit kann bei Bildung einer entsprechenden SubtaskResource eine dynamische Auswahl der jeweils ausführenden Peer-Einrichtung ausgewählt werden und die jeweilige Rechenlast auf die Peer-Einrichtungen mit den besten Leistungsprofilen für den jeweiligen Teildienst erteilt werden. Bei der Ausführung des zusammengesetzten Dienstes wird jeder Teildienst ausfallsicher ausgeführt, wobei bei einem Ausfall einer ausführenden Peer-Einrichtung mit minimalem Zeitaufwand der jeweilige Abarbeitungszustand des Teildienstes an einen zuvor bestimmten Peer übergeht, der als Watchdog-Peer bezeichnet wurde.

Obwohl die vorliegende Erfindung anhand bevorzugter Ausführungsbeispiele näher erläutert wurde, ist sie nicht darauf beschränkt, sondern vielfältig modifizierbar. Es können z. B. weitere Dienstverkettungen abweichend von dem Textchat von einem PDA aus erfolgen. Ferner sind beliebige Zusatzdienste denkbar, die nicht zwingend eine Werbung vermitteln müssen. Die angegebenen Resourcen können weitere, den Anforderungen eines zusammengesetzten Dienstes entsprechende Informationen aufweisen. Prinzipiell lässt sich das erfindungsgemäße Verfahren in beliebig ausgestalteten Peer-to-Peer-Netzwerken ausführen. Ein Internet-basiertes Peer-to-Peer-Netzwerk ist lediglich beispielhaft angegeben.

## Patentansprüche

1. Verfahren zum Bereitstellen eines Zusatzdienstes zu einem Basisdienst in einem Peer-Einrichtungen (A, B, C) aufweisenden Peer-to-Peer-Netzwerk (P2P), wobei der Zusatzdienst in Abhängigkeit von Profilparametern (NPR) eines Nutzers einer den Basisdienst anfragenden Peer-Einrichtung (A1) ausgewählt wird und wobei der Zusatzdienst ein Basisdienstergebnis (BDR) des Basisdienstes verarbeitet, das Basisdienstergebnis (BDR) mit zusätzlichen Daten ergänzt und der anfragenden Peer-Einrichtung (A1) als Gesamtdienstergebnis (UDR) übermittelt.

2. Verfahren nach Anspruch 1,
**dadurch gekennzeichnet,**
**dass** der Zusatzdienst und/oder der Basisdienst von jeweils mindestens einer Peer-Einrichtung (A1, C1) des Peer-to-Peer-Netzwerks (P2P) ausgeführt wird.

3. Verfahren nach Anspruch 1 oder 2,
**dadurch gekennzeichnet,**
**dass** mindestens eine AdvertisementProfileResource (APR) in dem Peer-to-Peer-Netzwerk (P2P) publiziert wird, welche den Zusatzdienst beschreibende Zusatzdienstparameter aufweist.

4. Verfahren nach einem der Ansprüche 1 - 3,
**dadurch gekennzeichnet,**
**dass** eine NutzerProfileResource (NPR) in dem Peer-to-Peer-Netzwerk (P2P) publiziert wird, welche die Profilparameter des Nutzers der den Basisdienst anfragenden Peer-Einrichtung (A1) aufweist.

5. Verfahren nach einem der Ansprüche 1 - 4,
**dadurch gekennzeichnet,**
**dass** mindestens eine Zusatzdienst-SubtaskResource in dem Peer-to-Peer-Netzwerk (P2P) publiziert wird, welche Vergleichsregeln für eine Gegenüberstellung der Profilparameter des Nutzers mit den publizierten Zusatzdienstparametern aufweist, zum Bestimmen einer Peer-Einrichtung, welche am besten zur Ausführung des Zusatzdienstes geeignet ist.

6. Verfahren nach einem der Ansprüche 3 - 5,
**dadurch gekennzeichnet,**
**dass** die Profilparameter des Nutzers mit den Zusatzdienstparametern, insbesondere unter Verwendung der Vergleichsregeln, verglichen werden und mindestens eine Peer-Einrichtung (B3) zur Ausführung des Zusatzdienstes ausgewählt wird.

7. Verfahren nach einem der Ansprüche 1 - 6,
**dadurch gekennzeichnet,**
**dass** eine Peer-Einrichtung des Peer-to-Peer-Netzwerks (P2P) ausgewählt wird, insbesondere die den Basisdienst anfragende Peer-Einrichtung (A1) oder die den Basisdienst ausführende Peer-Einrichtung (C1), welche zumindest eine Auswahl von Peer-Einrichtungen (B1-B5) bestimmt, durch welche der Zusatzdienst ausführbar ist.

8. Verfahren nach einem der Ansprüche 1 - 7,
**dadurch gekennzeichnet,**
**dass** der Zusatzdienst und/oder der Basisdienst aus Teildiensten (STN, STA, STB, STC) zusammengesetzt wird, wobei die Peer-Einrichtungen (A1, B1-B5, C1-C5, N1-N4) des Peer-to-Peer-Netzwerks (P2P) Dienstgruppen (SGB, SGC, SGN) zuordenbar sind, wobei jede Dienstgruppe (SGB, SGC, SGN) durch einen vorgegebenen Teildienst (STB, STC, STN) bestimmt ist, wobei durch jede einer jeweiligen Dienstgruppe (SGB, SGC, SGN) zugeordneten Peer-Einrichtung (B1-B5, C1-C5, N1-N4) der vorgegebene Teildienst (STB, STC, STN) ausführbar ist und eine ausgewählte Peer-Einrichtung (CB3, CC1, CN4) einer Dienstgruppe (SGD, SGC, SGN) den jeweiligen Teildienst (STB, STC, STN) ausführt, wobei von der den Basisdienst (STC) anfragenden Peer-Einrichtung (A1) eine Abfolge von auszuführenden Teildiensten (STN, STC, STB, STA) zur Bereitstellung des Basisdienstes (STC) und/oder des Zusatzdienstes (STB) und Vorgaben an die den jeweiligen Teildienst (STA, STB, STC, STN) auszuführenden Peer-Einrichtungen in dem Peer-to-Peer-Netzwerk (P2P) publiziert wird und die Auswahl der ausgewählten Peer-Einrichtungen (CB3, CC1, CN4) in Abhängigkeit von der publizierten Abfolge und den publizierten Vorgaben erfolgt.

9. Verfahren nach einem der Ansprüche 1 - 8,
**dadurch gekennzeichnet,**
**dass** der Basisdienst einen Chat-Dienst, VOIP-Dienst oder einen bildrahmenbasierten Videostreaming-Dienst umfasst.

10. Verfahren nach einem der Ansprüche 1 - 9,
**dadurch gekennzeichnet,**
**dass** der Zusatzdienst einen einzigen einen Werbedienst umfasst zum Einfügen von Audio-, Text- oder Grafikinformationen insbesondere in Bildrahmen eines Videostreaming-Dienstes.

11. Verfahren nach einem der Ansprüche 1 - 10,
**dadurch gekennzeichnet,**
**dass** die Profilparameter des Nutzers das Alter des Nutzers, den Ort der anfragenden Peer-Einrichtung (A1) und/oder die Leistungsfähigkeit der den Basisdienst anfragenden Peer-Einrichtung (A1) umfasst.

12. Verfahren nach einem der Ansprüche 1 - 11,
**dadurch gekennzeichnet,**
**dass** die Zusatzdienstparameter ein Alter von Zielgruppennutzern des Zusatzdienstes, einen gewünschten Ort von den Zusatzdienst nutzenden Peer-Einrichtungen und/oder die gewünschte Leistungsfähigkeit von Peer-Einrichtungen umfasst.

13. Verfahren nach einem der Ansprüche 1 - 12,
**dadurch gekennzeichnet,**
**dass** zum Bilden einer Dienstgruppe die folgenden Verfahrensschritte durchgeführt werden:
a) Publizieren einer CandidateResource (CRB1-CRB5) durch die Peer-Einrichtungen (B1-B5), wobei die CandidateResource (CRB1-CRB5) Informationen über die von der jeweiligen publizierenden Peer-Einrichtung (B1-B5) ausführbaren Teildienste (STB) und die Leistungsfähigkeit (MEMB) der jeweiligen publizierenden Peer-Einrichtung (B1-B5) aufweist;
b) Publizieren einer SubtaskResource (STRB) und/oder der Zusatzdienst-SubtaskResource, welche Informationen über mindestens einen der auszuführenden Teildienste und die zugehörigen Vorgaben aufweist; und
c) Auswählen der ausführenden Peer-Einrichtung (CB3) aus der Dienstgruppe (SGB) von Peer-Einrichtungen, mittels derer ein vorgegebenen Teildienst (STB) ausführbar ist, in Abhängigkeit von der Leistungsfähigkeit und den publizierten Vorgaben an die den jeweiligen Teildienst ausführenden Peer-Einrichtungen.

14. Verfahren nach Anspruch 13,
**dadurch gekennzeichnet,**
**dass** mindestens eine Watchdog-Peer-Einrichtung (WB) aus der Dienstgruppe (SGB) von Peer-Einrichtungen bestimmt wird, welche eine Funktion der den jeweiligen Teildienst (STB) ausführenden ausgewählten Peer-Einrichtung überwacht, und welche das Ausführen des jeweiligen Teildienstes übernimmt, falls die ausgewählte Peer-Einrichtung (CB3) ausfällt.

15. Verfahren nach Anspruch 13 oder 14,
**dadurch gekennzeichnet,**
**dass** eine ServiceGroupResource (SGRB) für eine jeweilige Dienstgruppe publiziert wird, welche Informationen über die aktuelle den Teildienst ausführende ausgewählte Peer-Einrichtung (CB) und/oder die bestimmten Watchdog-Peer-Einrichtungen (WB) aufweist, wobei die ServiceGroupResource (SGRB) insbesondere kontinuierlich aktualisiert wird.

16. Verfahren nach einem der Ansprüche 13 - 15,
**dadurch gekennzeichnet,**
**dass** das Publizieren der SubtaskResource (STR), das Auswählen der den jeweiligen Teildienst ausführenden Peer-Einrichtung (CB) und/oder das Bestimmen der Watchdog-Peer-Einrichtungen (WB) durch eine den jeweiligen Teildienst anfragende Peer-Einrichtung (A1) erfolgt.

17. Verfahren nach einem der Ansprüche 14 - 16,
**dadurch gekennzeichnet,**
**dass** zum Initialisieren des mit dem Zusatzdienst ergänzten Basisdienstes die folgenden Verfahrensschritte durchgeführt werden:
a) Publizieren einer ComposedServiceResource (CSR), welche die Abfolge der für die Ausführung des Zusatzdienstes und Basisdienstes verwendeten Teildienste, insbesondere eine Identifikation der NutzerProfileResource, Kriterien für die Auswahl der ausführenden Peer-Einrichtungen, eine Verkettung der Teildienste und Ausführungsparameter für die Teildienste, aufweist;
b) Publizieren einer SubtaskResource (STRB) zum Anfragen des in der Abfolge der Teildienste für den Basisdienst zuletzt auszuführenden Teildienstes durch die den Basisdienst anfragende Peer-Einrichtung (A1) und Auswählen der Peer-Einrichtung (CB3) der Dienstgruppe (SGB), welche den angefragten Teildienst auszuführen hat;
c) Auswählen der den Zusatzdienst auszuführenden Peer-Einrichtung, wobei eine Identifikation der den Zusatzdienst ausführenden Peer-Einrichtung als Übergabe-Peer-Einrichtung für das Basisdienstergebnis (BDR) von dem angefragten Teildienst (STB) des Basisdienstes in die SubtaskResource (STRB) für den Teildienst geschrieben wird; und
d) Publizieren von weiteren SubtaskResourcen (STRC, STRN) zum Anfragen des jeweils in der Abfolge der Teildienste vorhergehend auszuführenden Teildienstes (STC, STN) durch die ausgewählte Peer-Einrichtung (CB3, CC1), welche den in der Abfolge der Teildienste jeweils nachfolgend auszuführenden Teildienst ausführt, wobei eine Identifikation der den Teildienst (STB, STC) anfragenden Peer-Einrichtung (CB3, CC1) als Übergabe-Peer-Einrichtung für ein Teildienstergebnis von dem angefragten Teildienst (STB, STC) in die SubtaskResource (STRC, STRN) geschrieben wird, und Auswählen der Peer-Einrichtung (CC1, CN4) der Gruppe, welche den angefragten Teildienst (STC, STN) auszuführen hat.

18. Verfahren nach Anspruch 17,
**dadurch gekennzeichnet,**
**dass** nach dem Auswählen der Peer-Einrichtung (CN4), welche den in der Abfolge der Teildienste ersten Teildienst (STN) auszuführen hat, eine Initialisierungsnachricht (INIT) an die den Basisdienst anfragende Peer-Einrichtung (A1) gesendet wird.

19. Verfahren nach einem der Ansprüche 13 - 18,
**dadurch gekennzeichnet,**
**dass** in alle SubtaskResourcen (STR) Informationen über die Anforderungen an die Teildienste, die Verkettung der Teildienste und/oder Identifikatoren der ComposedServiceResourcen (CSR) geschrieben werden.

20. Verfahren nach einem der Ansprüche 13 - 19,
**dadurch gekennzeichnet,**
**dass** nach dem Auswählen aller die jeweiligen Dienste ausführenden Peer-Einrichtungen (CB3, CC1, CN4) eine Ringnachricht (RN1-RN4) von der den Basisdienst anfragenden Peer-Einrichtung (A1) an die ausgewählte Peer-Einrichtung (CN4), welche den in der Abfolge zuerst auszuführenden Teildienst ausführt, und über die die folgenden Teildienste und den Zusatzdienst ausführenden Peer-Einrichtungen (CC1, CB3) in der Abfolge der auszuführenden Dienste an die den Basisdienst anfragenden Peer-Einrichtung (A1) zur Instantiierung der Teildienste zurück gesendet wird.

21. Verfahren nach einem der Ansprüche 17 - 20,
**dadurch gekennzeichnet,**
**dass** in der ComposedServiceResource (CSR) der Zusatzdienst und/oder optionale Teildienste markiert werden, welche in der Ausführung der Verkettung der jeweiligen Teildienste übersprungen werden können.

22. Computerprogrammprodukt, welches die Durchführung eines Verfahrens nach einem der Ansprüche 1 - 21 auf einer oder mehreren programmgesteuerten Peer-Einrichtungen veranlasst.
